# EUROPEAN PATENT SPECIFICATION

(11) **EP 2 094 738 B1**
(45) Date of publication and mention of the grant of the patent: **27.02.2013**
(21) Application number: 07795606.8
(22) Date of filing: 01.06.2007
(51) Int. Cl.: C08F 8/00, C08F 10/00, C08F 110/10

(54) **FUNCTIONAL HYDROCARBON POLYMERS AND PROCESS FOR PRODUCING SAME**
FUNKTIONELLE KOHLENWASSERSTOFFPOLYMERE UND HERSTELLUNGSVERFAHREN DAFÜR
POLYMÈRES HYDROCARBONÉS FONCTIONNELS ET LEUR PROCÉDÉ DE FABRICATION

(30) Priority: 17.11.2006 US 859883 P
(43) Date of publication of application: 02.09.2009
(73) Proprietor: University Of Massachusetts Lowell Research Foundation, Lowell MA 01854 (US)
(72) Inventor: FAUST, Rudolf, Lexington, MA 02421 (US); OJHA, Umaprasana, Lowell, MA 01854 (US)
(74) Representative: Gambell, Derek
(86) International application number: PCT/US2007/012948
(87) International publication number: WO 2008/060333

(56) References cited:
- WO-A-2006/110647
- US-A- 5 332 791
- LI ET AL: "Polyisobutylene supports-a non-polar hydrocarbon analog of PEG supports" TETRAHEDRON, ELSEVIER SCIENCE PUBLISHERS, AMSTERDAM, NL, vol. 61, no. 51, 19 December 2005 (2005-12-19), pages 12081-12092, XP005175619 ISSN: 0040-4020
- HIGASHIHARA T ET AL: "SYNTHESIS OF POLY(ISOBUTYLENE-BLOCK-METHYL METHACRYLATE) BY A NOVEL COUPLING APPROACH" MACROMOLECULES, ACS, WASHINGTON, DC, US, vol. 39, no. 16, 8 August 2006 (2006-08-08), pages 5275-5279, XP001500375 ISSN: 0024-9297
- PRIYADARSI DE ET AL: "CARBOCATIONIC POLYMERIZATION OF ISOBUTYLENE USING METHYLALUMINUM BROMIDE COINITIATORS: SYNTHESIS OF BROMOALLY FUNCTIONAL POLYISOBUTYLENE" MACROMOLECULES, ACS, WASHINGTON, DC, US, vol. 39, no. 22, 31 October 2006 (2006-10-31), pages 7527-7533, XP001502985 ISSN: 0024-9297

## Description

### BACKGROUND OF THE INVENTION

Functional polymers are of great interest due to their potential applications in many important technological areas such as surface modification, adhesion, drug delivery, compatibilization of polymer blends, motor oil additives, low molecular weight precursors to high polymers, use as polymeric macroinitiators, etc.

In addition to the controlled and uniform size of the polymers, living polymerizations provide the simplest and most convenient method for the preparation of functional polymers. Although varieties of end-functionalized polymers have successfully been synthesized in anionic polymerization, there are relatively few end-functionalized polymers (polymers with functional groups selectively positioned at the termini of any given polymeric or oligomeric chain) synthesized by living cationic polymerization of vinyl monomers. There are two basic methods to prepare functional polymers by living cationic polymerization: initiation from functional initiators and termination by functional terminators.

Both have been employed to achieve the above target. However, post-polymerization functionalization is preferred, since in ionic polymerization many unprotected functional groups interfere during the course of polymerization. Furthermore, the functional initiator method requires an efficient coupling/linking agent for the preparation of bi- and multi-functional polymers, which are not readily available. The reported procedures to functionalize the polymers involve stringent synthetic pathways and are expensive. The procedures reported to date are complicated, laborious and expensive and, therefore, not practiced commercially. Accordingly, a need exists for novel methods of preparation of high quality functional polymers that overcome limitations of known methods.

We are aware of United States patent US 5332791 (BASF AG) which teaches that hydrocarbons and polymers thereof, of the structure (I) R-C(CH3)2-CH2-C(CH3)2-CH2-CH=CH-CH2-CI(I) where R is a hydrocarbon radical, can be prepared by reacting corresponding starting materials which contain chlorine bonded to tertiary carbon, of the structure R-C(CH3)2-CH2-C(CH3)2-CI(II) with from 1 to 10 moles of butadiene in the presence of a Friedel-Crafts catalyst in a solvent which is inert to the catalyst, and the hydrocarbons or polymers thereof can be reacted in a further step of the process with a compound from the group comprising ammonia, primary or secondary amine or polyamine, amino alcohol, amino ether, hydrazine or hydrazine which is substituted up to three times.

We are also aware of Li et al: "Polyisobutylene supports-a non-polar hydrocarbon analog of PEG supports" Tetrahedron, Elsevier Science Publishers, Amsterdam, NL, vol. 61, no. 51, 19 December 2005 (2005-12-19), pages 12081-12092, which describes synthetic routes to terminally functionalized polyisobutylene oligomers useful as supports in synthesis and catalysis. Such hydrocarbon polymers serve as highly soluble non-polar analogs of well known poly(ethylene glycol) supports for synthesis and catalysis with the difference that they are separated after a reaction by an extraction with alkane solvent. Polyisobutylene is a readily modified soluble polymeric support for use in synthesis and catalysis.

### SUMMARY OF THE INVENTION

In one embodiment, the present invention is a method of synthesizing a compound of formula (IIIe), 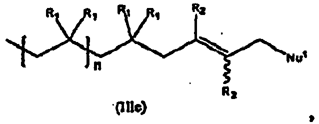 comprising a step of reacting a compound of formula (IIIc) 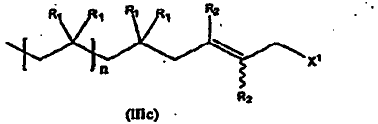 to nucleophilically substitute X¹ with Nu¹. In formulas (IIIc) and (IIIe), R₁ for each occasion is independently H or a C1-C4 alkyl, an alkoxy or a substituted or unsubstituted aryl; R₂ for each occasion is independently H, X², -CH₂X², -CHX²₂, -CX²₃, -C≡N, or -NO₂; n is an integer not less than 2, X¹ and X² are, for each occurrence, independently, a halogen; Nu¹ is selected from N₃- HC₂CH₂-O-, HO-, R^{a}O-, thymine, -CH₂-C(O)OH, wherein R^{a} is a C1-C12 alkyl or a polymer or copolymer fragment.

In one embodiment, the compound of formula (IIIe) is represented by formula (IIIb), while the compound of formula (IIIc) is represented by formula (III):

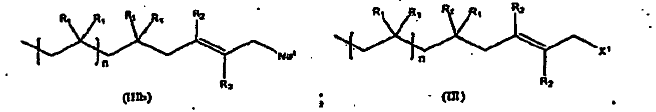

In another embodiment, the present invention is a method of synthesizing hydroxyl functional polymers of formula (VIa), comprising hydrolyzing an end-capped polymer of formula (IIIc), having a haloallyl end group, in the presence of a base, thereby producing a compound of formula (VIa):

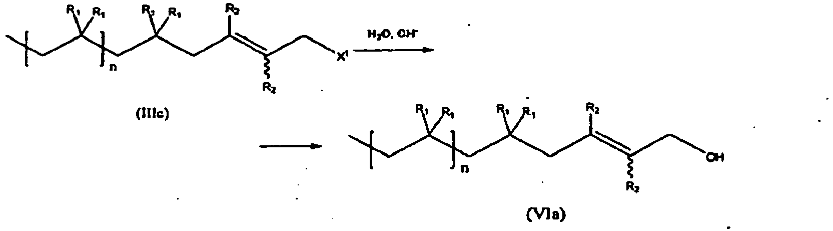

In one embodiment, the compound of formula (IIIc) is represented by formula (III), reproduced above, while the compound of formula (VIa) is represented by formula (VI): 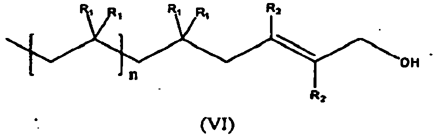 The variables in formula (VIa) are as defined above with respect to formulas (IIIc) and (IIIe).

In another embodiment, the present invention is a functional polymer of formula (XXXa):

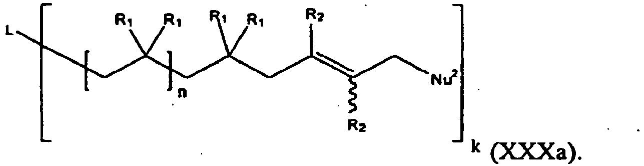

The variables in formula (XXXa) are as provided below: n is an integer not less than 2; k is an integer greater than or equal to 1; L is an initiator residue; R₁ for each occasion is independently H or a C1-C4 alkyl, an alkoxy or a substituted or unsubstituted aryl; R₂ for each occasion is independently H or an electron-withdrawing group, for example, X², CH₂X², CHX²₂, -CX²₃, -C ≡ N, -NO₂; and X¹ and X², for each occurrence, is independently a halogen; Nu² is selected from N₃-, HC₂CH₂-O-, HO-, R^{a}O-, wherein R^{a} is a C1-C12 alkyl or a polymer or copolymer fragment, thymine, -CH₂-C(O)OH, -C(O)N₃, -NHC(O)OR, -C(O)NHR, -NHC(O)NHR, wherein R is a C1-C12 alkyl, or a peptide-NH-.

The invention includes preparation of functional hydrocarbon polymers by nucleophilic substitutions of haloallyl functional polymers. Haloallyl functional polymers, in turn, can be easily and economically prepared by living cationic polymerization, followed by capping with 1,3-butadiene, as disclosed in U.S. Pat. App. 11/400,059, filed on April 7, 2006.

### DETAILED DESCRIPTION OF THE INVENTION

A description of example embodiments of the invention follows.

### Definitions of Terms

The term "alkyl", as used herein, unless otherwise indicated, means straight or branched saturated monovalent hydrocarbon radicals of formula CₙH₂ₙ₊₁.. Typically n is 1-1000, more typically, n is 1 - 100. Alkyl can optionally be substituted with -OH, -SH, halogen, amino, cyano, nitro, a C1-C12 alkyl, C1-C12 haloalkyl, C1-C12 alkoxy, C1-C12 haloalkoxy or C1-C12 alkyl sulfanyl. In some embodiments, alkyl can optionally be substituted with one or more halogen, hydroxyl, C1-C12 alkyl, C2-C12 alkenyl or C2-C 12 alkynyl group, C1-C12 alkoxy, or C1-C12 haloalkyl. The term alkyl can also refer to cycloalkyl.

The term "cycloalkyl", as used herein, means saturated cyclic hydrocarbons, i.e. compounds where all ring atoms are carbons. Examples of cycloalkyl include, but are not limited to, cyclopropyl, cyclobutyl, cyclopentyl, cyclohexyl, and cycloheptyl. In some embodiments, cycloalkyl can optionally be substituted with one or more halogen, hydroxyl, C1-C12 alkyl, C2-C12 alkenyl or C2-C12 alkynyl group, C1-C12 alkoxy, or C1-C12 haloalkyl.

The term "haloalkyl", as used herein, includes an alkyl substituted with one or more F, Cl, Br, or I, wherein alkyl is defined above.

The terms "alkoxy", as used herein, means an "alkyl-O-" group, wherein alkyl is defined above. Examples of alkoxy group include methoxy or ethoxy groups.

The term "aryl", as used herein, refers to a carbocyclic aromatic group. Examples of aryl groups include, but are not limited to phenyl and naphthyl. Examples of aryl groups include optionally substituted groups such as phenyl, biphenyl, naphthyl, phenanthryl, anthracenyl, pyrenyl, fluoranthyl or fluorenyl. Examples of suitable substituents on an aryl include halogen, hydroxyl, C1-C12 alkyl, C2-C12 alkene or C2-C12 alkyne, C3-C12 cycloalkyl, C1-C12 haloalkyl, C1-C 12 alkoxy, aryloxy, arylamino or aryl group.

The term "aryloxy", as used herein, means an "aryl-O-" group, wherein aryl is defined above. Examples of an aryloxy group include phenoxy or naphthoxy groups.

The term arylamine, as used herein, means an "aryl-NH-", an "aryl-N(alkyl)-", or an "(aryl)₂-N-" groups, wherein aryl and alkyl are defined above.

The term "heteroaryl", as used herein, refers to aromatic groups containing one or more heteroatoms (O, S, or N). A heteroaryl group can be monocyclic or polycyclic, e.g. a monocyclic heteroaryl ring fused to one or more carbocyclic aromatic groups or other monocyclic heteroaryl groups. The heteroaryl groups of this invention can also include ring systems substituted with one or more oxo moieties. Examples of heteroaryl groups include, but are not limited to, pyridinyl, pyridazinyl, imidazolyl, pyrimidinyl, pyrazolyl, triazolyl, pyrazinyl, quinolyl, isoquinolyl, tetrazolyl, furyl, thienyl, isoxazolyl, thiazolyl, oxazolyl, isothiazolyl, pyrrolyl, quinolinyl, isoquinolinyl, indolyl, benzimidazolyl, benzofuranyl, cinnolinyl, indazolyl, indolizinyl, phthalazinyl, pyridazinyl, triazinyl, isoindolyl, purinyl, oxadiazolyl, thiazolyl, thiadiazolyl, furazanyl, benzofurazanyl, benzothiophenyl, benzotriazolyl, benzothiazolyl, benzoxazolyl, quinazolinyl, quinoxalinyl, naphthyridinyl, dihydroquinolyl, tetrahydroquinolyl, dihydroisoquinolyl, tetrahydroisoquinolyl, benzofuryl, furopyridinyl, pyrolopyrimidinyl, and azaindolyl.

The foregoing heteroaryl groups may be C-attached or N-attached (where such is possible). For instance, a group derived from pyrrole may be pyrrol-1-yl (N-attached) or pyrrol-3-yl (C-attached).

Suitable substituents for heteroaryl are as defined above with respect to aryl group.

Suitable substituents for an alkyl, cycloalkyl include a halogen, an alkyl, an alkenyl, a cycloalkyl, a cycloalkenyl, an aryl, a heteroaryl, a haloalkyl, cyano, nitro, haloalkoxy.

Further examples of suitable substituents for a substitutable carbon atom in an aryl, a heteroaryl, alkyl or cycloalkyl include but are not limited to -OH, halogen (-F, -Cl, -Br, and -I), -R, -OR, -CH₂R, -CH₂OR, -CH₂CH₂OR,. Each R is independently an alkyl group.

In some embodiments, suitable substituents for a substitutable carbon atom in an aryl, a heteroaryl or an aryl portion of an arylalkenyl include halogen, hydroxyl, C1-C12 alkyl, C2-C12 alkenyl or C2-C12 alkynyl group, C1-C12 alkoxy, aryloxy group, arylamino group and C1-C12 haloalkyl.

In addition, the above-mentioned groups may also be substituted with =O, =S, =N-alkyl.

In the context of the present invention, an amino group may be a primary (-NH₂), secondary (-NHRₚ), or tertiary (-NRₚR_{q}), wherein Rₚ and Rq may be any of the alkyl, alkenyl, alkynyl, alkoxy, cycloalkyl, cycloalkoxy, aryl, heteroaryl, and a bicyclic carbocyclic group.

As used herein; the term "peptide" refers to an amide polymer of amino acids, in which the monomers can be either naturally occurring or artificial.

### Synthesis of Endcapped polymer

In various embodiments, this invention utilizes a method to "cap" a living polyolefin cation, typically a polyisoolefin cation, even more typically a living polyisobutylene cation (PIB⁺), with a capping agent.

A capping agent can include optionally substituted olefins, such as optionally substituted conjugated dienes, and optionally substituted butadienes. As another example, unsubstituted butadienes can be employed.

A "living" cationic polyolefin, generally, is any polyolefin with a terminal cationic group and is termed "living" polymers because it is typically made by one of many living polymerization methods known to those of ordinary skill in the art. In various embodiments, a polyolefin, e.g., polyisoolefin, polymultiolefin or poly(substituted or unsubstituted vinylidene aromatic compounds), and, more typically polyisobutylene, can be reacted with an optionally substituted conjugated diene, e.g., butadiene, to "cap" the polymer, wherein the cap is halide terminated group. Suitable polyolefins can include C₄ to C₁₈ polyisomonoolefins, C₄ to C₁₄ polymultiolefins, and poly(substituted or unsubstituted vinylidene aromatic compounds), for example C₄ to C₁₀ polyisomonoolefins, or more typically C₄ to C₈ polyisomonoolefins. Polyisobutylene is an example of a preferred isoolefin polymer.

One set of reaction conditions that can produce these polymeric carbocations is, in a solvent, to contact the olefin monomer with an initiating system comprising an initiator (usually an organic ether, organic ester, or organic halide) and a co-initiator. The co-initiator is typically used in concentrations equal to or typically 2 to 40 times higher than the concentration of the initiator. Examples of co-initiators include one or more of BCl₃, TiCl₄, AlBr₃, and organoaluminum halides such as Me₃Al₂Br₃, MeAlBr₂, and Me₂AlBr.

The polymerization can typically be conducted in a temperature range of from -10° to -100° C, typically from -50° to -90° C for 10 to 120 minutes, depending on the concentration of the initiator and the co-initiator.

Once the desired living polymer is obtained, the capping agent, e.g., optionally substituted butadiene, can be added to the polymerization media in concentrations equal to up to about 10 times the concentration of the living chain ends, typically 1 to 5 times the concentration of the living chain ends, even more typically 1 to 2 times the concentration of the living chain ends. The butadiene generally is reacted with the living polymer for 10 minutes to 5 hours, depending on the concentration of the living chain ends and the butadiene. The time necessary to achieve essentially 100% capping will vary with the initiator, co-initiator and butadiene concentrations. With higher initiator concentrations the time is shorter, about 20 minutes, while lower initiator concentrations may require 10 hours to achieve 100% capping.

In preferred embodiments, the methods of this invention (polymerizing monomer to make living polymer) can be conducted in a polymerization zone of a conventional polymerization apparatus, and in the presence or in the absence of a diluent. Suitable polymerization conditions typically include a temperature ranging from -100° C to 10° C, and preferably from -80° C to 0° C, for a time period ranging from 1 to 180 minutes. Typically, the polymerization reaction mixture may be subjected to agitation, e.g., using conventional mixing means.

The living polymers employed in the methods of the present invention can be, for example, homopolymers, copolymers, terpolymers, and the like depending upon the olefinic chargestock used. Preferred number average molecular weights (Mn) of the living polymers of the present invention may range from 500 to 2,000,000, generally from 2,000 to 100,000, or in some embodiments from 1500 to 5000. Preferably, the polymers have a narrow molecular weight distribution such that the ratio of weight average molecular weight to number average molecular weight (*M*_{w}/*M*ₙ) of the polymers ranges from 1.0 to 1.5, and typically from 1.0 to 1.2. The polymers can be recovered from the polymerization zone effluent and finished by conventional methods. In one embodiment, synthesizing an end-capped polymer according to the techniques described herein results in a very high yield (up to about 100%) of a functionalized monoaddition product of butadiene to the polymer chain.

Scheme (I) illustrates the preferred process for preparation of the starting material employed by the present invention (formula (III) below). Specifically, scheme (I) exemplifies monoaddition of 1,3-butadiene to a living polyisobutylene chain resulting in capping of the growing polymer chain by a chloroallylic group.

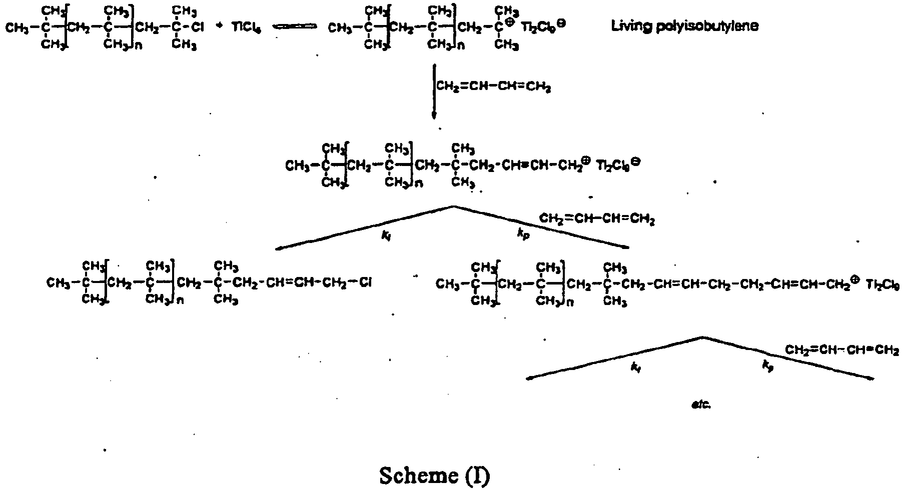

As described in U.S. Pat. 2006/0264577, "Capping Reactions in Cationic Polymerization; Kinetic and Synthetic Utility," filed on April 7, 2006, selected conditions have been discovered under which termination is faster than propagation of butadiene (*kₜ* >> *kₚ*), resulting in carbocations reacting with olefins to yield the [1:1] adduct exclusively. As used herein, the term "faster" means at least 10-fold faster, preferably at least 100-fold faster, and more preferably 1000-fold faster, under otherwise similar conditions.

Some embodiments of the reactions of the present invention include termination by halogenation that is faster than addition of molecules of the conjugated diene to the carbocation in Scheme (I), thereby producing an endcapped polymer having a halogenated endcap group. An example of such a reaction is that of a polymer of formulas (I): 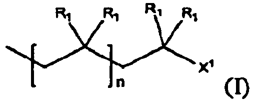 with an optionally substituted conjugated diene of formula (II) as an endcapping reagent in the presence of a Lewis acid, 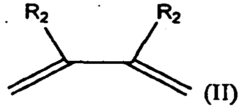 thereby producing an endcapped polymer of formula (III) having a halogenated endcap group

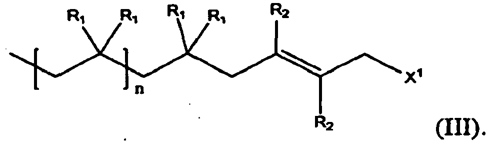

In formulas (I) through (III): n is an integer not less than 2; R₁ for each occasion is independently H or a C1-C4 alkyl, an alkoxy, for examples a straight or branched C1-C12 alkoxy such as methoxy, ethoxy, isobutoxy, etc., or a substituted or unsubstituted aryl, for example C6-C 18 aryls, preferably phenyl, optionally substituted with C1-C4 straight or branched alkyl, halogen, or a C1-C4 alkoxy; and R₂ for each occasion is independently H or an electron-withdrawing group, for example, X², CH₂X², CHX²₂, -CX²₃, -C ≡ N, -NO₂; and X¹ and X², for each occurrence, is independently a halogen (F, Cl, Br, or I).

Although formulas (I) and (III) above show monofunctional polymers, the methods and the compounds of the present invention include polyfunctional polymers, represented by formulas (Ia) and (IIIa): 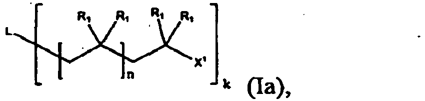 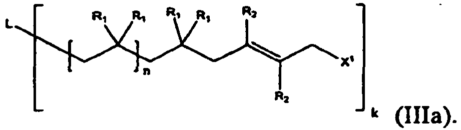 As used herein, including formulas (Ia) and (IIIa), L is an initiator residue such as cumyl, dicumyl and tricumyl when cumyl, dicumyl or tricumyl chloride, methylether or ester is used as initiator. Other examples include 2,4,4,6-tetramethylheptylene or 2,5-dimethylhexylene, which arise when 2,6-dichloro-2,4,4,6-tetramethylheptane or 2,5-dichloro-2,5-dimethylhexane is used as initiator. Many other cationic mono- and multifunctional initiators are known in the art. k is an integer greater than or equal to 1. One skilled in the art will understand that the synthetic schemes presented below can all be performed using compounds of formulas (Ia) and (IIIa), thus resulting in polyfunctional polymers.

In one embodiment, the compound of formula (III) and (IIIa) are represented by structural formulas (IIIc) and (IIId), respectively: 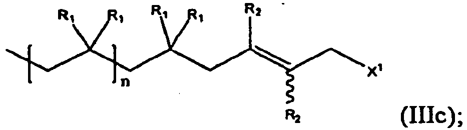 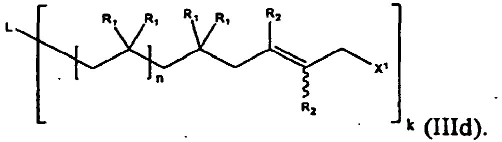 As used herein, a substituent on a carbon atom that forms an unsaturated carbon-carbon bond and whose attachment to such carbon atom is denoted by the symbol 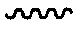 can be in either *cis* or *trans* substituent. The remainder of values and preferred values for the variable in formulas (IIIc) and (IIId) are as defined above with respect to formulas (III) and (IIIa).

Solvents suitable for practicing the reactions of the present invention are, for example, solvents that include at least one component having a dielectric constant less than 9. Preferably, the solvents include at least one component having a dielectric constant less than 7. Alternatively, the solvents include a mixture of at least one solvent having a polar solvent with a dielectric constant equal to or higher than 9 and at least one nonpolar solvent with a dielectric constant lower than 6. Examples of suitable solvents include one or more of hexane, cyclohexane, methylcyclohexane, methylchloride, n-butyl chloride, dichloromethane, toluene, and chloroform.

In another embodiment, a bromoallyl-capped polymer can be used in subsequent hydrolysis. Synthesis of such a bromo functionalized haloallyl can, for example, be accomplished by reacting a polymer of formula (IV) 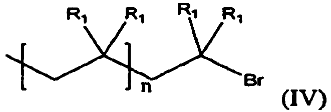 with an optionally substituted conjugated diene of formula (II) as an endcapping reagent in the presence of a metal bromide Lewis acid, 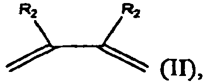 thereby producing an endcapped polymer of formula (V) having a halogenated endcap group 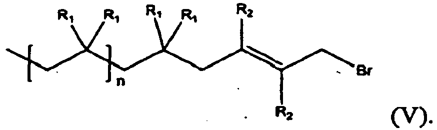 The variables in formulas (IV) and (V) are as defined above with respect to formulas (I) through (III).

In one embodiment, the compound of formula (V) is represented by structural formula (Va): 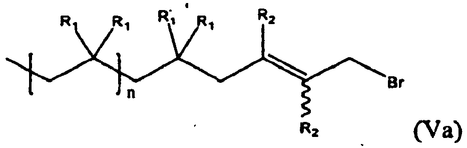 The values and preferred values of the variables in formula (Va) are as defined above with respect to formulas (I) through (III).

### Hydrolysis of Haloallyl Functional Polymers

Haloallyl functional polymers of general formula (III) can be subjected to a simple hydrolysis by a base (e.g. inorganic base such as alkali hydroxide, carbonate, etc., or organic base such as Tetrabutylammonium Hydroxide, 1,8-Diazabicyclo[5.4.0]undec-7-ene, 1,5-Diazabicyclo[4.3.0]non-5-ene, N,N,N',N'-Tetramethyl-1,8-naphthalenediamine, Phosphazene bases such as N'-tert-Butyl-N,N,N',N',N",N"-hexamethylphosphorimidic triamide, etc.) to produce hydroxyl functional hydrocarbon polymers of general formula (VI) according to Scheme (II) below:

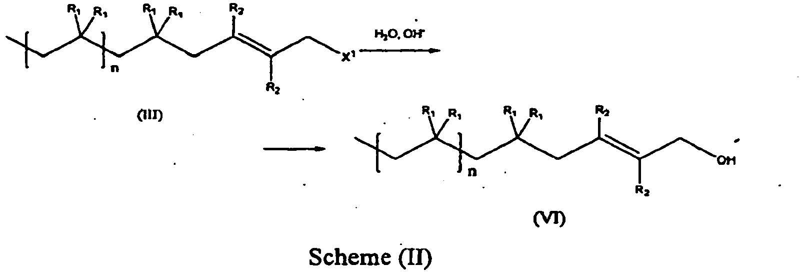

In one embodiment, compound of formula (III) can be represented by formula (IIIc), while the compound of formula (VI) is represented by structural formula (VIa): 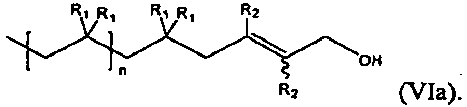 The values and preferred values of the variables in formula (VIa) are as defined above for formula (VI).

Any suitable solvent or solvent mixtures in which reagents are soluble and with which reagents do not react can be used. The reaction is most commonly carried out in a solvent mixture. The starting materials preferably are dissolved in an ethereal solvent such as tetrahydrofuran (THF), dioxane and the like. For example, the solvent can be THF or a mixture of THF and water. A mixture of organic solvent (e.g. THF) in which the polymer is soluble but that is miscible with water is preferred when an inorganic base is used for hydrolysis. Alternatively a phase transfer catalyst such as quaternary ammonium salts or crown ethers may be employed.

Suitable bases employed in hydrolysis include inorganic bases, for example, sodium hydroxide, sodium bicarbonate or potassium hydroxide can be employed. The concentration of the base employed in hydrolysis can be (in percent by weight), for example, from about 0.5% to about 95%, for example: 0.5%, 1%, 1.5%, 5%, 10%, 15%, 20%, 25%, 30%, 35%, 40%, 45%, 50%, 55%, 60%, 65%, 70%, 75%, 80%, 85%, 90% or 95%.

The hydrolysis can be carried out at a temperature from about 50 °C to about 150 °C. For example, the hydrolysis can be carried out at a temperature from 50 °C to 60 °C, 60 °C to 70 °C, 70 °C to 80 °C, 80 °C to 90 °C, 90 °C to 100 °C, 100 °C to 110 °C, 110 °C to 120 °C, 120 °C to 130 °C, 130 °C to 140 °C, 140 °C to 150 °C. In other examples, the hydrolysis can be carried out at about 65 °C, about 100 °C, or at about 130 °C.

The hydrolysis can be carried out for any time from about 30 minutes to about 48 hours. For example, hydrolysis can be carried out for a time period of 0.5 hours to 2 hours, 2 hours to 4 hours, 4 hours to 6 hours, 6 hours to 8 hours, 8 hours to 10 hours, 10 hours to 12 hours, 12 hours to 14 hours, 14 hours to 16 hours, 16 hours to 18 hours, 18 hours to 20 hours, 20 hours to 22 hours, 22 hours to 24 hours, 24 hours to 30 hours, 30 hours to 36 hours, 36 hours to 42 hours, 42 hours to 48 hours. In certain embodiments, the hydrolysis can be carried out for 2 hours, 4 hours, 6 hours, 12 hours, 24 hours, 26 hours or 48 hours.

In Scheme (II), X¹ can be Cl, Br, or I. Preferably, X¹ is Cl or Br. More preferably, X¹ is Br. In one embodiment, X¹ in Scheme (II) is Cl.

An example of an inorganic base employed in the hydrolysis step is potassium hydroxide. The hydrolysis is carried out at a temperature from about 80 °C to about 120 °C, preferably, at 90-110 °C. Alternatively, temperature is from about 100 °C to about 150 °C, preferably, at 120-140 °C. The reaction is carried out for the duration from about 12 hours to about 36 hours, preferably, for 20-28 hours. The concentration of KOH is from about 1% to about 25% by weight, preferably, about 1-10% by weight.

More preferably, X¹ is Cl, KOH concentration is at 1-10% by weight, and the hydrolysis is carried out for 20-28 hours at 90-110 °C. Even more preferably, X¹ is Cl, KOH concentration is at 1-10% by weight, and the hydrolysis is carried out for 20-28 hours at 120-140 °C.

In another embodiment, X¹ in Scheme (II) is Br. An example of an inorganic base employed in the hydrolysis step is potassium hydroxide. The hydrolysis is carried out at a temperature from about 60 °C to about 100 °C, preferably, at 55-75 °C. Alternatively, hydrolysis is carried out at a temperature from about 100 °C to about 150 °C, preferably, at 120-140 °C. The reaction is carried out for the duration from about 1 hours to about 10 hours, preferably, for 2-5 hours. The concentration of KOH is from about 0.5% to about 60% by weight, preferably, about 40-60% by weight. Alternatively, the concentration of KOH is from 0.5% to 1.5%. More preferably, X¹ is Br, KOH concentration is at 40-60% by weight, and the hydrolysis is carried out for 20-28 hours at 55-75 °C. Even more preferably, X¹ is Br, KOH concentration is at 0.5-1.5% by weight, and the hydrolysis is carried out for 2-5 hours at 120-140 °C.

### Nucleophilic Substitution of Haloallyl Functional Polymers

In addition to hydrolysis, haloallyl functional polymers of general formula (III) can be subjected to a nucleophilic attack by a variety of nucleophiles. Thus, in one embodiment, the present invention is a method of synthesis of a derivative of a compound of formula (III) by nucleophilic substitution. The general synthetic route for this derivatization is given in scheme (III) below:

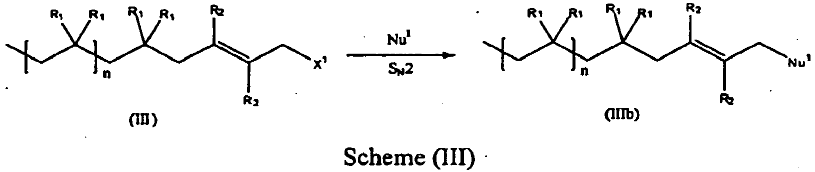

In scheme (III), nucleophile Nu¹ is any nucleophilic reagent capable of reacting with a compound of formula (III) in a solvent in which the a compound of formula (III) and Nu¹ can be dissolved an remain stable. Preferably, Nu¹ is selected from N₃-, HC₂CH₂-O-, HO-, R^{a}O-, thymine, -CH₂-C(O)OH, wherein R^{a} is a C1-C12 alkyl or a polymer or copolymer fragment. As used herein, the terms "polymer" or "copolymer" mean a macromolecule built up by the linking of monomers by a process termed polymerization. As used herein, these terms include low molecular weight oligomers. Non-limiting examples of a polymer or copolymer fragment include polyethers such as polyethylene glycol (PEG), and polyesters such as polymers or copolymers of lactide, glycolide or ε-caprolactone. Examples of C1-C12 alkyls are methyl, ethyl.

In certain embodiments of the present invention, a compound of formula (IIIb) is further reacted to replace moiety Nu¹ with moiety Nu². (See the description below.) Accordingly, in one embodiment, the present invention is a compound of formula (IIIf):

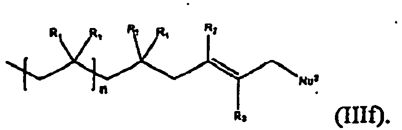

Nu² is selected from N₃-, HC₂CH₂-O-, HO-, R^{a}O-, wherein R^{a} is a C1-C 12 alkyl or a polymer or copolymer fragment (as defined above with reference to formula (IIIb)), thymine, -CH₂-C(O)OH, -C(O)N₃, -NHC(O)OR, -C(O)NHR, -NHC(O)NHR, wherein R is a C1-C12 alkyl, or a peptide-NH-.

In one embodiment, the compound of formula (III) can be represented by formula (IIIc) 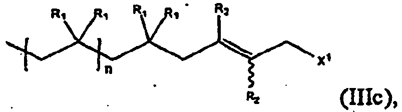 while the compound of formula (IIIb) is represented by formula (IIIe): 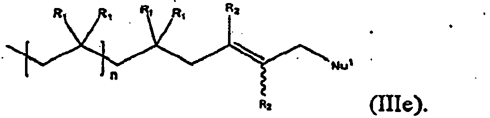 In this embodiment, replacement of moiety Nu¹ by moiety Nu², as a result of a subsequent reaction, will produce a compound of formula (IIIg): 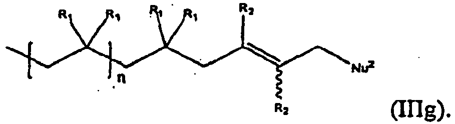 Values and preferred values of the variables in formulas (IIIe) and (IIIg) are as defined above with respect to formulas (IIIb) and (IIIf).

General conditions for the reactions described below are known in the art and are described, for example, in March, "Advanced Organic Chemistry - Reactions, Mechanisms and Structure", 5th Edition, John Wiley & Sons, (2001). The preferred embodiments of the present invention are described below.

The haloallyl-capped polymer of formula (III) was obtained as described above. The haloallyl-capped polymer (III) was converted to hydroxide, alkoxide (e.g. methoxide), azide, amine, aldehyde, acid and propargyl functionalities quantitatively using single step procedures.

In the embodiments in which Nu² replaces Nu¹, one or more additional steps are employed. For example, modification of the carboxylate (XV) derivative can be employed to synthesize carbonylazide (XVI) (see scheme (X)), which may act as a building block to attach urea, urethane and amide chain extenders (scheme (XI)). Furthermore, peptides can also be effectively attached to the carbonylazide intermediate under mild conditions (scheme (XI)). The propynyloxy derivative (XII) obtained according to scheme (VI) can be further employed to synthesize a triazole derivative (XXI) according to scheme (XII).

Accordingly, in one embodiment, the present invention is a method of synthesis of compound of formula (X): 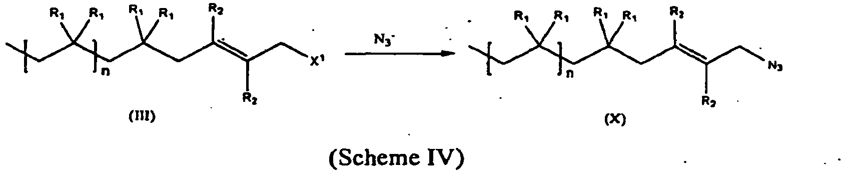 The values and preferred values for the variables in formula (X) are as defined above with reference to formula (III). N⁻₃ refers to any soluble form of azide, for example metal azides (NaN₃, KN₃, etc.).

In one embodiment, the compound of formula (III) can be represented by formula (IIIc), while the compound of formula (X) is represented by formula (Xa): 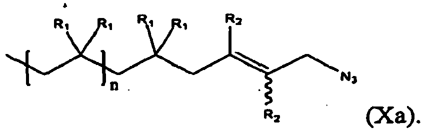 The values and preferred values of the variables in formula (Xa) are as defined above with respect to formula (X).

The reaction conditions for the reaction of scheme (IV) are as follows: in a mixture of solvent, where one is dry THF and the other one is a dry polar aprotic solvent, in a temperature range of 25 °C to 75 °C and the reactions were carried out under nitrogen or argon atmosphere. For example, the reaction is carried out in a polar aprotic solvent such as nitromethane, dimethyl acetamide (DMA), N,N-dimethyl formamide (DMF), dimethyl sulfoxide (DMSO), hexamethyl phosphoramide (HMPA), N-methyl pyrrolidone (NMP), tetrahydrofuran (THF), or dioxane, or a mixture thereof. Preferably, the solvents is a THF/DMF mixture at 83.3%:16.7%. The temperature of the reaction is typically from about 25 °C to about 100 °C, preferably, from about 25 °C to about 75 °C, for example 50 °C.

In another embodiment, the present invention is a method of synthesis of compound of formula (XI) according to Scheme (V): 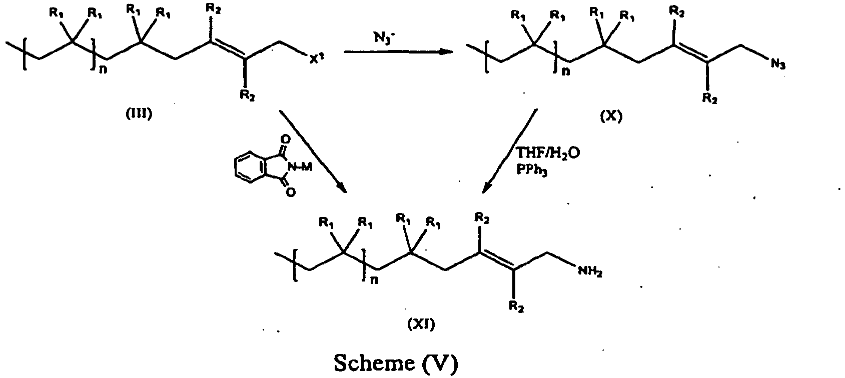 N⁻₃ refers to any soluble form of azide, for example metal azides (NaN₃, KN₃, etc.) and M is an alkali metal (Na, K, etc.).
The values and preferred values for the variables in formula (XI) are as defined above with reference to formula (III).

In one embodiment, the compound of formula (III) can be represented by formula (IIIc), the compound of formula (X) can be represented by formula (Xa), while the compound of formula (XI) is represented by formula (XIa): 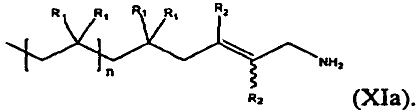 The values and preferred values of the variables in formula (XIa) are as defined above with respect to formula (XI).

The synthetic route from compound (III) to (XI) can be carried out with any suitable amination reagent. Preferably, the amination reagent is potassium phthalimide followed by hydrolysis in hydrazine hydrate and basic solution. The reaction is preferably carried out in a mixture of dry THF and a dry polar aprotic solvent under nitrogen or argon atmosphere in a temperature range of 66 °C to 100 °C for 12 to 24 h. For example, the reaction is carried out in a polar aprotic solvent such as nitromethane, dimethyl acetamide (DMA), N,N-dimethyl formamide (DMF), dimethyl sulfoxide (DMSO), hexamethyl phosphoramide (HMPA), N-methyl pyrrolidone (NMP), tetrahydrofuran (THF), or dioxane, or a mixture thereof. Preferably, the solvents is a THF/DMF mixture at 75%:25%.

The synthetic route from compound (X) to (XI) can be carried out with any suitable reducing reagent such as LiAlH₄, NaBH₄, H₂/Pd or Ni and PPh₃. Preferably, the reducing reagent is PPh₃. The reaction is preferably carried out in a polar protic solvent. The polar solvent can be one or more of a polar protic solvent, such as water or an alcohol; an ethereal solvent such as THF, dioxane and the like. For example, the solvent can be a mixture of THF and water. Preferably, the mixture of THF and water 91%:9% is used.

In another embodiment, the present invention is a method of synthesis of compound of formula (XII) according to Scheme (VI): 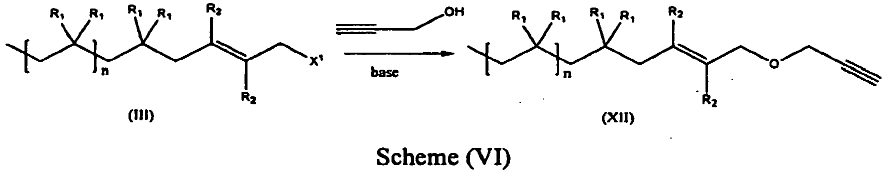 The values and preferred values for the variables in formula (XII) are as defined above with reference to formula (III).

In one embodiment, the compound of formula (III) can be represented by formula (IIIc), while the compound of formula (XII) is represented by formula (XIIa): 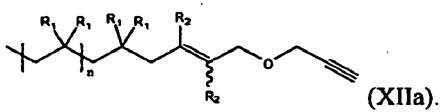 The values and preferred values of the variables in formula (XIIa) are as defined above with respect to formula (XII).

The reaction conditions for the reaction of scheme (VI) are as follows: in a polar aprotic solvent such as nitromethane, dimethyl acetamide (DMA), N,N-dimethyl formamide (DMF), dimethyl sulfoxide (DMSO), hexamethyl phosphoramide (HMPA), N-methyl pyrrolidone (NMP), tetrahydrofuran (THF), or dioxane, or a mixture thereof and in presence of a base, i.e. sodium hydride, KOH, NaOH etc under inert atmosphere and in the temperature range of 20-100 °C. Preferably, if KOH is used as the base, the solvent is dry THF and the temperature is 70 °C.

In another embodiment, the present invention is a method of synthesis of compound of formula (XII) according to Scheme (VII): 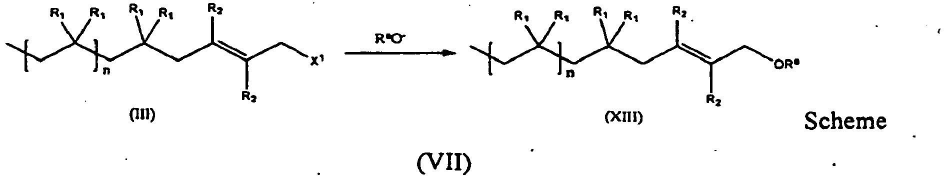 The values and preferred values for the variables in formula (XIII) are as defined above with reference to formula (III), and R^{a} is a C1-C12 alkyl (e.g., methyl or ethyl) or polymer or copolymer fragment, e.g., polyethylene oxide (PEG) and polyesters such as polymers or copolymers of lactide, glycolide or ε-caprolactone.

In one embodiment, the compound of formula (III) can be represented by formula (IIIc), while the compound of formula (XIII) is represented by formula (XIIIa): 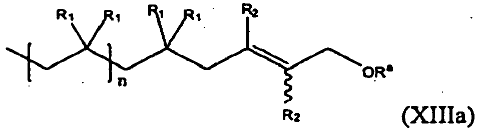 The values and preferred values of the variables in formula (XIIIa) are as defined above with respect to formula (XIII).

The reaction is most commonly carried out in an alcoholic solvent, except with PEG. In the latter case the preferred solvent is an aprotic polar solvent such as tetrahydrofuran. An ethereal solvent such as tetrahydrofuran (THF), dioxane and the like, is preferably used as a cosolvent. For example, the solvent can be a mixture of THF and an alcohol, such as methanol or ethanol the solvent has to be a polar aprotic and polar protic mixture.

In scheme (VII), the reaction is preferably catalyzed by a base. Suitable bases include inorganic bases, for example, sodium hydroxide, sodium bicarbonate or potassium hydroxide can be employed. Preferably, the solvent is a THF/MeOH mixture at 83.3%:16.7%. The temperature of the reaction is typically from about 66 °C to about 100 °C, preferably, 70 °C.

In another embodiment, the present invention is a method of synthesis of compound of formula (XIV) according to Scheme (VIII): 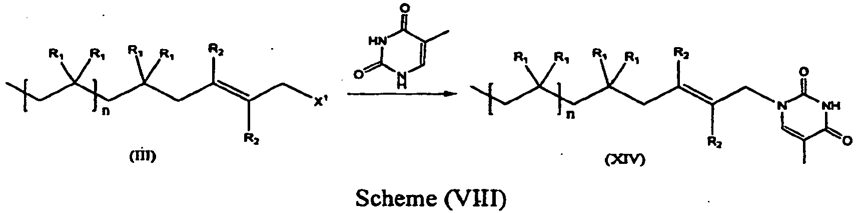 The values and preferred values for the variables in formula (XIV) are as defined above with reference to formula (III).

In one embodiment, the compound of formula (III) can be represented by formula (IIIc), while the compound of formula (XIV) is represented by formula (XIVa): 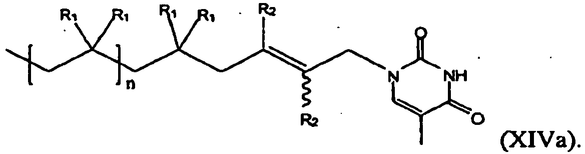 The values and preferred values of the variables in formula (XIVa) are as defined above with respect to formula (XIV).

The reaction conditions for the reaction of scheme (VIII) are as follows: a mixture of polar aprotic solvent hexamethyl phosphoramide (HMPA), N-methyl pyrrolidone (NMP), tetrahydrofuran (THF) and water in a temperature range of 25 °C to 100 °C. In scheme (VIII), the reaction is preferably catalyzed by a base. Suitable bases include inorganic bases, for example, sodium hydroxide, sodium bicarbonate or potassium hydroxide can be employed. Preferably, KOH is used as the base, the solvent is a mixture of THF and water and the temperature is 70 °C.

In another embodiment, the present invention is a method of synthesis of compound of formula (XV), starting from a compound of formula (III) and dimethylmalonate according to Scheme (IX): 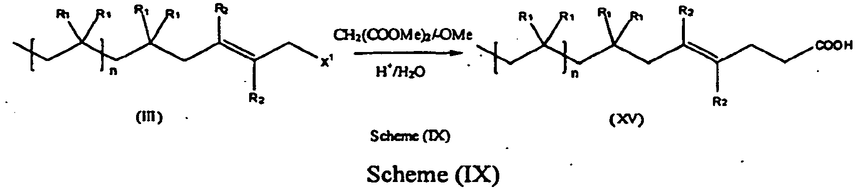 The values and preferred values for the variables in formula (XV) are as defined above with reference to formula (III).

In one embodiment, the compound of formula (III) can be represented by formula (IIIc), while the compound of formula (XV) is represented by formula (XVa): 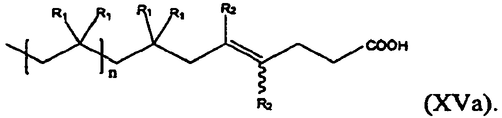 The values and preferred values of the variables in formula (XVa) are as defined above with respect to formula (XV).

The reaction conditions for the reaction of scheme (IX) are as follows: a polar aprotic solvent, temperature range 25-100 °C under inert (nitrogen or argon) atmosphere] Preferably the solvent is dry THF and the temperature is 70 °C.

In another embodiment, the present invention is a method of synthesis of compound of formula (XVI), starting from a compound of formula (XV) according to scheme (X): 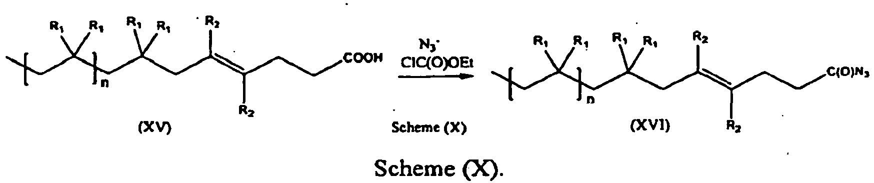 As before, N⁻₃ refers to any soluble azide form, e.g. metal azide.

In one embodiment, the compound of formula (XV) can be represented by formula (XVa), while the compound of formula (XVI) is represented by formula (XVIa): 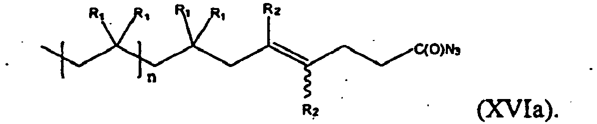 The values and preferred values of the variables in formula (XVIa) are as defined above with respect to formula (XVI).

The reaction conditions for the synthetic route from compound (XV) to compound (XVI) are as follows: in a polar aprotic solvent, i.e. THF, in presence of a base, i.e. triethyleneamine or pyridine in a temperature range of -10 °C to 30 °C under inert atmosphere. Preferably, the solvent is THF, the base is triethylamine and the temperature range is 0-25 °C.

In another embodiment, the present invention is a method of synthesis of any of the compounds of formula (XVII), (XVIII), (XIX) and (XX) according to the reactions of Scheme (XI), where "rt" stands for room temperature: 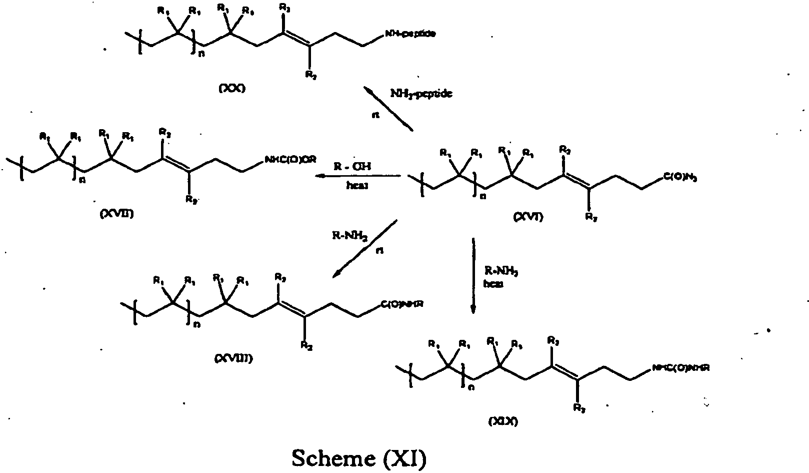 The values and preferred values for the variables in formulas (XVII)-(XX) are as defined above with reference to formula (III). In scheme (XI), R is a C1-C12 alkyl.

In one embodiment, the compound of formula (XVI) can be represented by formula (XVIa), while the compound of formulas (XVII)-(XX) is represented by formulas (XVIIa)-(XXa): 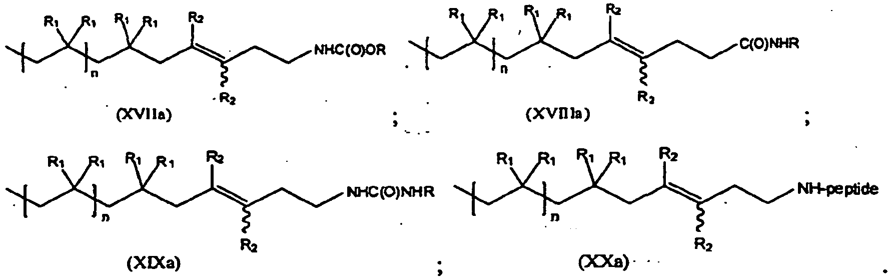 The values and preferred values of the variables in formulas (XVIIa)-(XXa) are as defined above with respect to formulas (XVI)-(XX).

The reaction conditions for the synthetic routes from compound (XVI) to compounds (XVII) through (XX) are as follows: in a polar aprotic solvent and within a temperature range of 25 °C to 100 °C.

In another embodiment, the present invention is a method of synthesis of compound of formula (XXI), starting from a compound of formula (XII) according to scheme (XII):

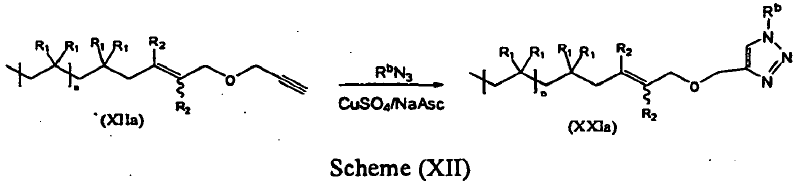

The values and preferred values for the variables in formula (XXI) are as defined above with reference to formula (III). In scheme (XII), R^{b} is an optionally substituted alkyl (for example C1-C20 alkyl), an optionally substituted aryl (for example C6-C20 aryls, preferably phenyl, optionally substituted with C1-C4 straight or branched alkyl or halogen), an optionally substituted heteroaryl (e.g., C6-C20 heteroaryl) or a polymer or copolymer fragment. Preferably, polymer or copolymer is soluble in water, and/or has a glass transition or melting temperature above 25 °C, and/or is biodegradable. Non-limiting examples of a polymer include polyethers such as polyethylene glycol (PEG), and polyesters such as polylactide.

In one embodiment, the compound of formula (XII) can be represented by formula (XIIa), while the compound of formula (XXI) is represented by formula (XXIa): 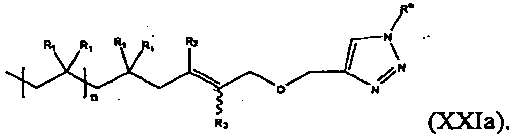 The values and preferred values of the variables in formula (XXIa) are as defined above with respect to formula (XXI).

The reaction conditions for the reaction of scheme (XII) are as follows: in a polar aprotic solvent and water mixture, the temperature range is 20-66 °C.

Alternatively, formula (XXI) is a block copolymer, wherein R^{b} is a polymer or a block copolymer.

As mentioned above, compounds (IIIa) and (IIId) can be used in the methods of the present invention: 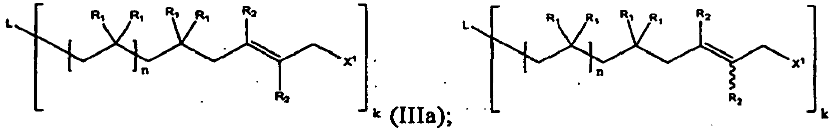 (IIId). Variable L was defined above with respect to formula (IIIa). When these compounds are used as starting materials, examples below represent various embodiments of the present invention.

In one embodiment, the present invention.is a compound of formula (XXXIVa) 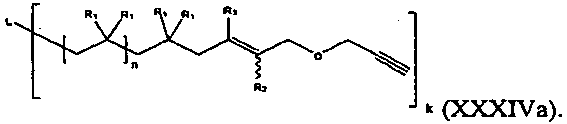 One embodiment of the compound of formula (XXXIVₐ) is represented by formula (XXXIV): 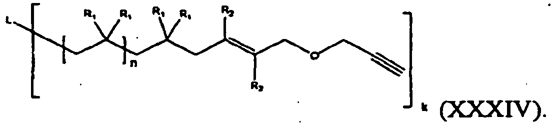 Values and preferred values of the variables in formulas (XXXIV) and (XXXIVa) are as defined above with respect to formulas (IIIa) and (XII).

In another embodiment, the present invention is a compound represented by formula (XXXVa): 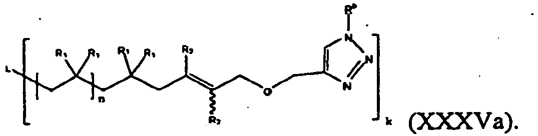 One embodiment of the compound of formula (XXXVa) is represented by formula (XXXV). 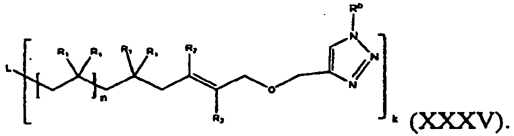 Values and preferred values of the variables in formulas (XXXV) and (XXXVa) are as defined above with respect to formulas (IIIa) and (XXI).

In one embodiment, the present invention is a compound of formula (XXXVIa): 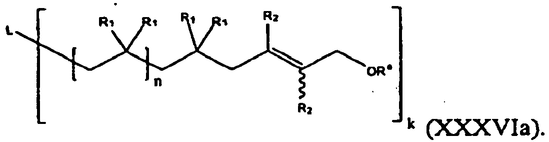 One embodiment of the compound of formula (XXXVIa) is represented by formula (XXXVI): 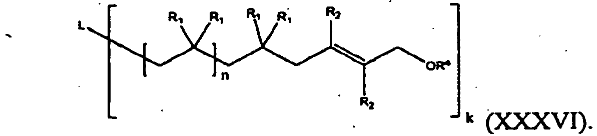 The values and preferred values of the variables in formulas (XXXVI) and (XXXVIa) are as defined above with respect to formulas (IIIa) and (XIII).

In one embodiment, the present invention is a compound of formula (XXXVIIa): 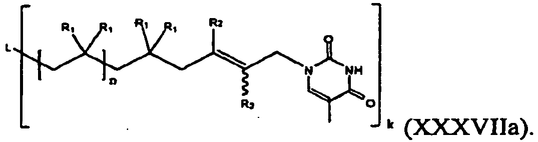 One embodiment of the compound of formula (XXXVIIa) is represented by formula (XXXVII):

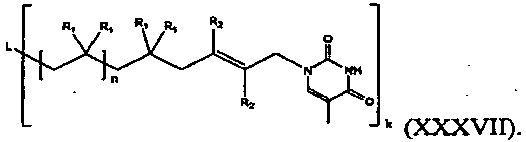

Values and preferred values of the variables in formulas (XXXVII) and (XXXVIIa) are as defined above with respect to formulas (IIIa) and (XIV).

In one embodiment, the present invention is a compound of formula (XXXVIIIa): 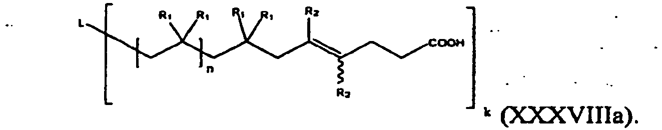 One embodiment of the compound of formula (XXXVIIIa) is represented by formula (XXXVIII):

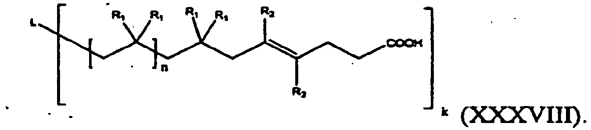

Values and preferred values of the variables in formulas (XXXVIII) and (XXXVIIIA) are as defined above with respect to formulas (IIIa) and (XV).

In one embodiment, the present invention is a compound of formula (XXXIXa): 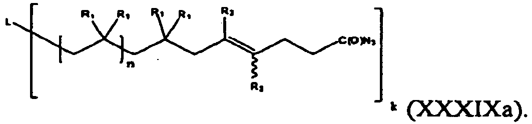 One embodiment of the compound of formula (XXXIXa) is represented by formula (XXXIX):

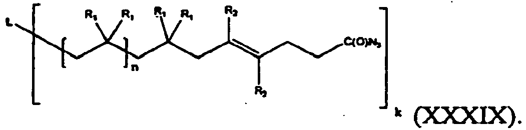

Values and preferred values of the variables in formulas (XXXIX) and (XXXIXa) are as defined above with respect to formulas (IIIa) and (XVI).

In one embodiment, the present invention is a compound of formula (XLa): 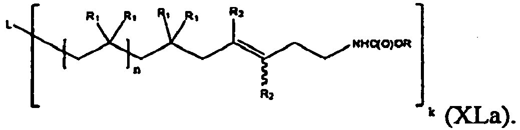 One embodiment of the compound of formula (XLa) is represented by formula (XL):

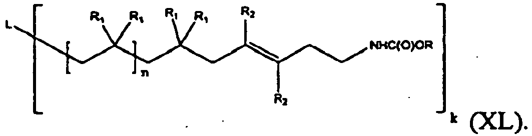

Values and preferred values of the variables in formulas (XL) and (XLa) are as defined above with respect to formulas (IIIa) and (XVII).

In one embodiment, the present invention is a compound of formula (XLIa): 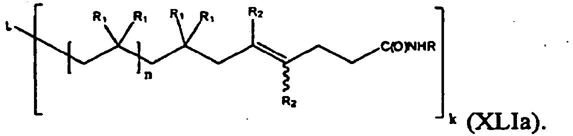 One embodiment of the compound of formula (XLIa) is represented by formula (XLI):

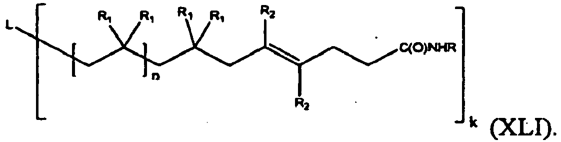

Values and preferred values of the variables in formulas (XLI) and (XLIa) are as defined above with respect to formulas (IIIa) and (XVIII).

In one embodiment, the present invention is a compound of formula (XLIIa): 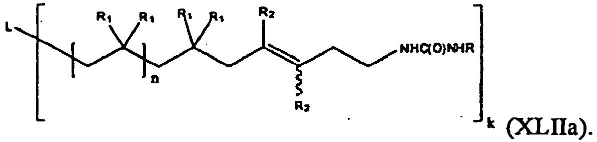 One embodiment of the compound of formula (XLIIa) is represented by formula (XLII):

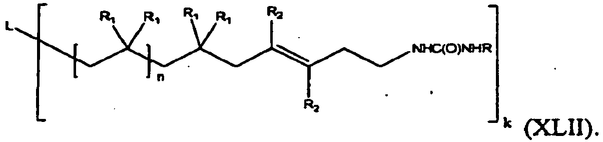

Values and preferred values of the variables in formulas (XLII) and (XLIIa) are as defined above with respect to formulas (IIIa) and (XIX).

In one embodiment, the present invention is a compound of formula (XLIIIa): 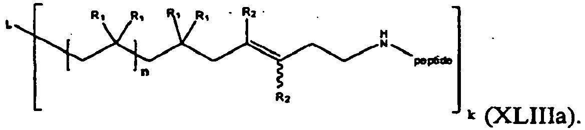 One embodiment of the compound of formula (XLIIIa) is represented by formula (XLIII):

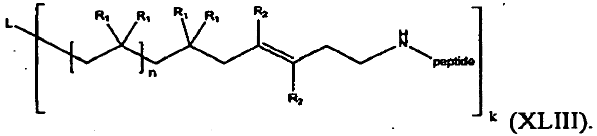

Values and preferred values of the variables in formulas (XLIII) and (XLIIIa) are as defined above with respect to formulas (IIIa) and (XX).

### ARTICLES OF MANUFACTURE

The α,ω-PIB-diol, diamine or diacid (or the corresponding polyfunctional PIBs) are valuable intermediates to thermoplastic polyurethane, polyester or polyamide elastomers or elastomer modified plastics. The α,ω-PIB-diamine (or the corresponding polyfunctional PIBs) may also be employed to cure epoxy resins or modify the properties of cured epoxy resins. End-functional PIBs containing azide and alkyne functionalities can be employed in the modular synthesis of block copolymers by the Sharpless type click reaction (1,3 dipolar cycloaddition). Thymine functional PIBs can be chain extended or crosslinked by UV light catalyzed photodimerization. PIB based amphiphilic block copolymers, such as PIB-block-PEO, are useful as surfactants.

The above polymers of the present invention exhibit improved properties. For example, thermoplastic polyurethanes obtained from polymeric diols presently employed as materials for the soft segments, i.e., polyester diols, polyether diols and polydiene diols, suffer from serious limitations. The polyester based polyurethane is prone to hydrolytic degradation, the polyether component undergoes oxidative degradation *in vivo* and polydienes suffer from poor thermal and oxidative stability. In contrast PIB has excellent thermal, oxidative and biostability.

The thermoplastic polyurethanes, polyesters or polyamides of the present invention are potential new thermoplastic elastomers, other polymeric materials and biomaterials. In some embodiments, the article of manufacture is an insertable or implantable medical device, e.g., a catheter, an endotracheal tube, a tracheostomy tube, a wound drainage device, a wound dressing, a stent coating, an implant, an intravenous catheter, a medical adhesive, a shunt, a gastrostomy tube, medical tubing, cardiovascular products, heart valves, pacemaker lead coating, a guidewire, or urine collection devices. In medical devices from which a therapeutic agent is released, certain compositions will also exhibit an appropriate release profile and therefore these materials are also useful as medical drug eluting articles and drug eluting coatings.

In some embodiments, thermoplastic polyurethanes, polyesters or polyamides of the invention can be melt-processed, for example, by injection molding and extrusion. Compositions used for this method can be used alone or compounded with any other melt-processable material for molding.

The thermoplastic polyurethanes, polyesters or polyamides of the invention can also be coated onto preformed articles. When used as a coating, the copolymers can be applied by any means, including those methods known in the art. For example, a composition comprising the thermoplastic polyurethanes, polyesters or polyamides of the invention can be brushed or sprayed onto the article from a solution, or the article can be dipped into the solution containing the copolymers of the invention.

### EXEMPLIFICATION

### Synthesis of PIB-AllylCl and α,ω-dichloroallyl PIB (ClAllyl-PIB-AllylCl)

First, isobutylene (IB) was polymerized in hexanes/methyl chloride 60/40 (v/v) at -80 °C using [IB] = 0.04 M, [2-chloro, 2,4,4-trimethylpentane, TMPCI] = 0.01 M, [2,6-di-*tert*.-butylpyridine, DTBP] = 0.006 M and [TiCl₄] = 0.036 M for 60 minutes and then 1,3-butadiene (BD) at [BD] = 0.04 M at -80 °C was added. After 6 hours the reaction was quenched with pre-chilled methanol. Quantitative crossover reaction from living polyisobutylene (PIB) chain end to 1,3-butadiene followed by instantaneous termination (absence of multiple addition of BD) and selective formation of 1,4-addition product was obtained (conversion of IB = 100 %, M_{n,GPC} = 3200, M_{n,NMR} = 2800, PDI = 1.07). The ¹H NMR analysis of the product showed the exclusive formation PIB-AllylCl (VII):

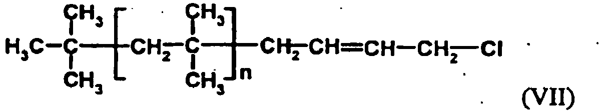

ClAllyl-PIB-AllylCl was synthesized similarly, using 5-*tert*-butyl-1,3-*bis*(1-chloro-1-methylethyl) benzene instead of TMPCl.

### Halogen exchange reaction

Halogen exchange reaction was carried out in a toluene/acetone mixture (65/35, *v*/*v*) using a large excess ([LiBr]/[PIB-AllylCl] = 200) of anhydrous LiBr under a dry nitrogen atmosphere. A typical experiment is as follows: In a two-necked round-bottomed flask, PIB-AllylCl (5 g; 1 % w/v), LiBr (31 g), toluene (325 mL), and acetone (175 mL) were placed and refluxed with stirring. After 12 hours, the solution was cooled to room temperature. Then, the solvent was evaporated under reduced pressure. Excess LiBr was removed by washing with distilled water. The polymer was purified by precipitation using a Hex/methanol system twice. The ¹H NMR analysis of the product showed complete exchange of Cl to Br.

### Hydrolysis of PIB-AllylX (X= Cl or Br)

In a typical experiment 0.5 g of PIB-AllylX was dissolved in 10 mL tetrahydrofuran. Next, 1-10 ml of KOH solution (1, 5, 10 and 50%) in water was added and the reaction was carried out for a predetermined time at a predetermined temperature. Experiments carried out at temperatures higher than the boiling point of tetrahydrofuran were carried out in pressure reactors. After the reaction hexanes was added and the solution was washed with water until neutral. The solution was dried on anhydrous NaSO₄ and the polymer was recovered by evaporating hexanes on the rotavap. The product was characterized by ¹H NMR and FTIR spectroscopy.

### Results

PIB-AllylCl, 24 hours, 100 °C

| KOH conc., % | Hydrolysis Yield, % |
|---|---|
| 1 | 10 |
| 5 | 34 |
| 10 | 27 |

PIB-AllylCl, 24 hours, 130 °C

| KOH conc., % | Hydrolysis Yield, % |
|---|---|
| 5 | 87 |
| 10 | 63 |

PIB-AllylBr, 24 h, reflux temperature (65 °C)

| KOH conc., % | Hydrolysis Yield, % |
|---|---|
| 1 | 15 |
| 5 | 25 |
| 10 | 33 |
| 50 | 37 |

PIB-AllylBr, 24 h, 130 °C

| KOH conc., % | Hydrolysis Yield, % |
|---|---|
| 1 | 100 |

### Hydrolysis of XAllyl-PIB-AllylX

In a typical experiment 0.1 g dihaloallyl PIB dissolved in 10 mL THF was placed in a Parr pressure reactor (capacity 125mL) and 10 ml of 1% KOH solution was added to it. The reaction was then heated and allowed to proceed at 130 °C. After predetermined times the reactor was cooled to room temperature and the solvent was removed under reduced pressure. The polymer was dissolved in hexanes and washed with distilled water. The organic layer was passed dried on anhydrous sodium sulfate and concentrated under reduced pressure to yield the crude product. The crude product was purified by re-precipitation in hexanes/methanol and the polymer was dried under vacuum. According to ¹H NMR spectroscopy complete hydrolysis was accomplished in 3h for BrAllyl-PIB-AllylBr and in 24 h for ClAllyl-PIB-AllylCl.

### Synthesis of PIB-allyl-methoxide

Dry THF (10 mL) was taken in a 100 mL three necked round bottomed flask fitted to a reflux condenser. A continuous nitrogen gas flow was maintained through out the course of reaction. To it PIB-allyl-chloride (200 mg, 0.07 mmol) was added and the mixture was stirred till a homogenous solution was obtained. Dry MeOH was added to the solution in dropwise manner till turbidity occurs. Further 3-4 drops of dry THF was added to the mixture to obtain a clear solution. To the reaction mixture KOH (180 mg, 3.21 mmol) was added and the mixture was refluxed for 5 hours. The reaction was stopped and cooled to room temperature. The excess THF was distilled and the sticky mass obtained was dissolved in hexane and re-precipitated in methanol. The process was repeated thrice to remove the inorganic impurities. The solid was then kept under vacuum to remove the traces of solvents.

Physical state: Sticky solid, Yield: 87%, NMR (CDCl₃, ppm, δ): 5.75, 5.55, 3.90, 3.35, 2.05, 1.45, 1.1.

### Synthesis of PIB-block-PEG

PIB-allyl-chloride (200 mg, 0.07 mmol) was dissolved in dry THF (20 mL) and to it PEG-OH (420 mg, 0.21 mmol) was added. The mixture was kept under nitrogen atmosphere and KOH (960 mg, 17.5 mmol) was added to it with constant stirring. The stirring mixture was set to reflux for 48 h. The reaction was stopped and cooled to room temperature. The mixture was filtered and the filtrate was kept under reduced pressure to evaporate the solvent. The residue was dissolved in chloroform and washed with water to remove excess PEG-OH. The organic layer was passed through sodium sulfate and evaporated to get a sticky white liquid. According to ¹H NMR studies 100% conversion with respect to PIB-allyl-chloride was achieved.

In a modified procedure 1:1 equivalent of PIB-allyl-chloride and PEG-OH were reacted for 16 h under nitrogen atmosphere using a temperature range of 0 °C to ambient temperature with 250 molar equivalent of sodium hydride and 50 equivalent of tetrabutylammmmonium bromide. The ¹H NMR spectrum showed 93% coupling efficiency with respect to the PIB-allyl-chloride.

### Synthesis of PIB-allyl-azide

Dry THF (10 mL) was taken in a 100 mL three necked round bottomed flask fitted to a reflux condenser. A continuous nitrogen gas flow was maintained through out the course of reaction. To it PIB-allyl-chloride (200 mg, 0.07 mmol) was added and the mixture was stirred till a homogenous solution was obtained. Dry DMF was added to the solution in dropwise manner till precipitation occurs. Further dry THF was added to the mixture to obtain a clear solution. To the stirring mixture NaN₃ (200 mg, 3.08 mmol) was added and the mixture was heated at 50 °C for 3 hours and room temperature for 8 h. The reaction was stopped and cooled to room temperature. The excess THF was distilled and the sticky mass obtained was dissolved in hexane and re-precipitated in methanol. The process was repeated thrice to remove the inorganic impurities. The product was then vacuum dried at room temperature.

Physical state: Sticky solid; Yield: 91%; NMR (CDCl₃, ppm, δ): 5.82, 5.55, 3.74, 2.08, 1.45, 1.15; FT-IR (thin film, cm⁻¹): 2952 (-CH str), 2097 (-N₃ str), 1472, 1389, 1366, 1231, 762.

### Synthesis of PIB-allyl-phthalimide

PIB-allyl-chloride (272 mg, 0.095 mmol) was dissolved in dry THF (9 mL) and to it 3 mL of dry DMF was added and the mixture was stirred at room temperature. To the stirring mixture potassium phthalimide (278 mg, 1.5 mmol) was added and the mixture was set to reflux under nitrogen atmosphere for 12 hours. The reaction was stopped and cooled to room temperature. The excess THF was evaporated and methanol was added to the sticky mass left over. The precipitate formed was separated and dissolved in hexane. The solution was filtered and the filtrate was re-precipitated in methanol. The sticky solid obtained was further purified by dissolution and re-precipitation method using hexane and methanol.

Physical state: Sticky solid; Yield: 83%; NMR (CDCl₃, ppm, δ): 7.9, 7.7, 5.85,5.5,4.3,2.0, 1.4, 1.0.

### Deprotection of phthalimide to PIB-allyl-amine

PIB-allyl-phthalimide (210 mg, 0.07 mmol) was dissolved in THF (10 mL) and to it hydrazine hydrate (190 mg, 3.8 mmol) was added and the mixture was refluxed for 24 h. The reaction was stopped and cooled to room temperature. The mixture was added with a solution of KOH (320 mg) in 2 mL of water and was further stirred for 30 min. THF was evaporated under reduced pressure and methanol was added to it. The precipitate obtained was further purified by dissolving in hexane and re-precipitating in methanol.

Physical state: sticky solid; NMR (CDCl₃, ppm, δ): 5.6, 3.3, 2.7, 2.0, 1.4, 1.0.

### Synthesis of PIB-allyl-carboxylic acid

Na (112 mg, 4.87 mmol) was taken in a three necked round bottomed flask (A) kept under nitrogen atmosphere. The temperature of the system was maintained at 0 °C with the help of an ice bath. Dry methanol (2 mL) was added to it in dropwise manner with constant stirring till the sodium becomes soluble. In another 100 mL rb flask (B) kept under nitrogen atmosphere, dry THF (10 mL) was taken followed by dimethylmalonate (522 mg, 5.67 mmol). The sodium methoxide solution was now transferred to the flask (B) with the help of a syringe and the mixture was stirred for 30 min at room temperature. The color of the solution becomes milky indicating the formation of sodium salt of dimethylmalonate. To it PIB-allyl-Cl (270 mg, 0.09 mmol) in dry THF (2 mL) was added slowly with stirring. The mixture was set to reflux for 12 hours. The reaction was stopped and cooled to room temperature. The solution was acidified till pH 4 by adding diluted HCl. The excess THF was evaporated under reduced pressure. The mass was added to methanol and the liquid portion was decanted of. The sticky solid was purified further by dissolution and reprecipitation method using hexane as solvent and methanol as non solvent. The polymer was further dissolved in 20 mL of THF and 3 mL of concentrated HCl was added to the solution in dropwise manner with stirring. The mixture was then refluxed for 24 hours. The product was neutralized with sodiumbicarbonate solution and the THF was evaporated. The sticky mass was dissolved in chloroform and was washed with water. The organic layer was passed through sodium sulfate and concentrated under reduced pressure to get a white sticky solid.

Physical state: sticky solid; NMR (CDCl₃, ppm. δ): 5.65, 5.4,2.7,2.0; FT-IR (thin film, cm⁻¹): 2953 (-CH str), 1717 (-COOH str), 1471, 1389, 1366, 1231, 762.

### Synthesis of PIB-allyl-malonic ester from PIB-allyl-bromide

PIB-allyl-bromide (172 mg, 0.06 mmol) was dissolved in 15 mL of dry THF and 2 mL of dry acetonitrile was added to it. To the solution, K₂CO₃ (215 mg, 1.55 mmol) was added and the mixture was set to reflux. To the reflux mixture methyl malonate (210 mg, 1.6 mmol) was added and the refluxing continued for 20 hours. The reaction was then stopped and cooled to room temperature. The mixture was filtered and the filtrate was concentrated under reduced pressure. The mass obtained was purified by dissolving in hexane and reprecipitating in methanol.

Physical state: sticky white solid; NMR (CDCl₃, ppm, δ): 5.6, 5.35, 3.75, 3.45, 2.65, 1.95, 1.4, 1.0.

### Synthesis of propargyl derivative of PIB-allyl-chloride

PIB-allyl-chloride (212 mg, 0.074 mmol) was dissolved in 10 mL of dry THF and to it KOH (230 mg, 4.1 mmol) was added followed by propargyl alcohol (252 mg, 4.5 mmol). The mixture was set to reflux for 18 h. The progress of the reaction was checked after 5, 10 and 18 hours using ¹H NMR spectroscopy, which indicated 50, 72 and 100% conversion respectively. The reaction was then stopped and cooled to room temperature. The excess THF was evaporated under reduced pressure. The sticky mass obtained was dissolved in hexane and precipitated in methanol. The process was repeated three times and the white sticky precipitate was kept under high vacuum to remove the traces of solvent trapped in the polymer matrix.

Physical state: sticky solid; Yield: 92 %; NMR (CDCl₃, ppm, δ): 5.8, 5.55, 4.2, 4.1, 2.45, 2.0, 1.4, 1.0.

## Claims

1. A method of synthesizing a compound of formula (IIIe), 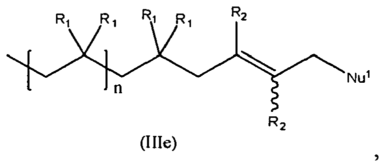 comprising a step of reacting a compound of formula (IIIc) 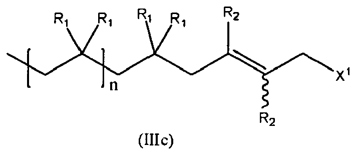 to nucleophilically substitute X¹ with Nu¹,
wherein:
R₁ for each occasion is independently H or a C 1-C4 alkyl, an alkoxy or a substituted or unsubstituted aryl;
R₂ for each occasion is independently H, X², -CH₂X², -CHX²₂, -CX²₃, -C=N, or -NO₂;
n is an integer not less than 2;
X¹ and X² are, for each occurrence, independently, a halogen; and
Nu¹ is selected from N₃-, HC₂CH₂-O-, HO-, R^{a}O-, thymine, -CH₂-C(O)OH,
wherein R^{a} is a C1-C12 alkyl or a polymer or copolymer fragment.

2. The method of Claim 1, wherein the compound of formula (IIIc) is reacted according to following scheme to nucelophilically substitute X¹ with -OH:

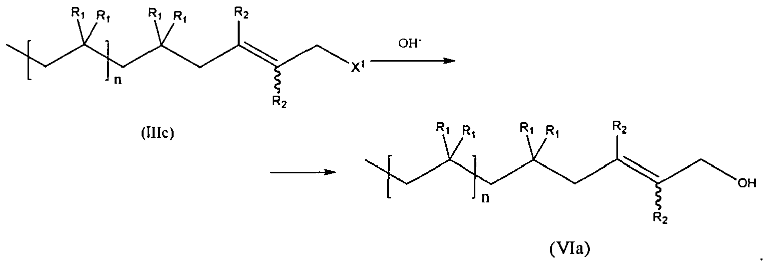

3. The method of Claim 2, wherein the compound of formula (IIIc) is reacted by hydrolyzing in the presence of a base.

4. The method of Claim 1, wherein the compound of formula (IIIc) is reacted according to following scheme to nucleophilically substitute X¹ with N₃⁻: 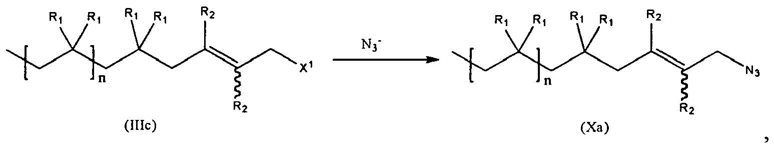 optionally further including a step of reducing the compound of formula (Xa) to produce the compound of formula (XIa):

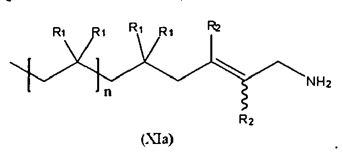

5. The method of Claim 1, wherein the compound of formula (IIIc) is reacted according to the following scheme to nucleophilically substitute X¹ with -OCH₂CCH: 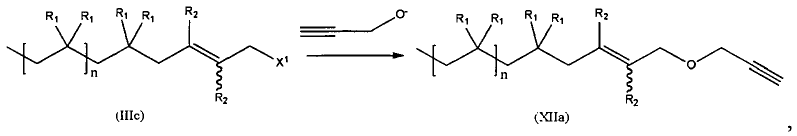 optionally further including the step of reacting the compound of formula (XIIa) with R^{b}N₃ to obtain a compound of formula (XXIa), according to the following scheme: 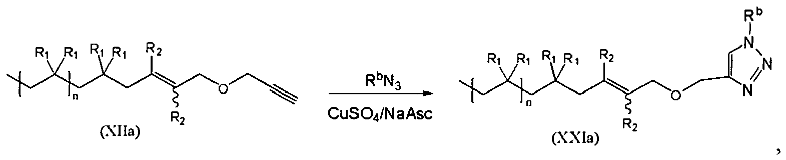 wherein R^{b} is an optionally substituted alkyl, an optionally substituted aryl, an optionally substituted heteroaryl or a polymer or copolymer fragment, especially wherein R^{b} is a straight or branched alkyl CₙH₂ₙ₊₁, wherein n = 1-100, or phenyl, benzyl, thiophenyl, each optionally substituted by a halogen, -OH, -CN, -NH₃ or PEG.

6. The method of Claim 1, wherein
a) the compound of formula (IIIc) is reacted according to the following scheme to nucleophilically substitute X¹ with -OR^{a}, 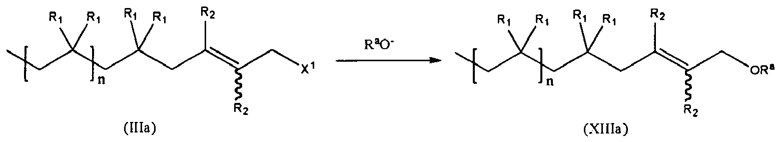 wherein R^{a} is a C1-C12 alkyl or a polymer or copolymer fragment, for example wherein R^{a} is a PEG fragment, or wherein R^{a} is methyl, ethyl or polyethylene oxide fragment, or
b) the compound of formula (IIIc) is reacted according to the following scheme to nucleophilically substitute X¹ with thymine:

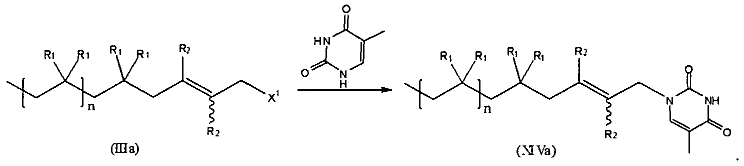

7. The method of Claim 1, wherein the compound of formula (IIIc) is reacted according to the following scheme to nucleophilically substitute X¹ with -CH₂-COOH: 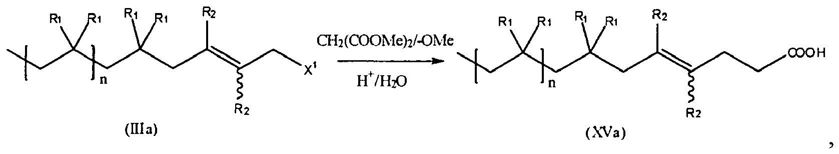 optionally further including the step of reacting the compound of formula (XVa) with an azide according to the following scheme to produce the compound of formula (XVIa): 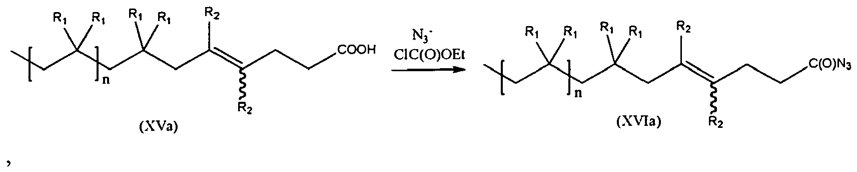 and optionally further including the step of
a) reacting the compound of formula (XVIa) with an alcohol R-OH to produce the compound of formula (XVIIa): 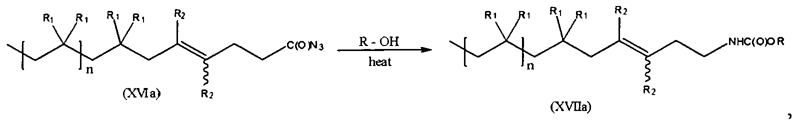 wherein R is a C1-C12 alkyl, or
b) reacting the compound of formula (XVIa) with an amine of formula R-NH₂ to produce the compound of formula (XVIIIa): 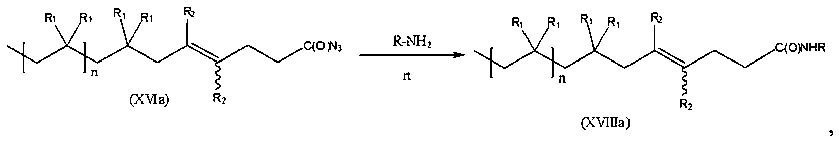 or
c) reacting the compound of formula (XVIa) with an amine of formula R-NH₂ to produce a compound of formula (XIXa): 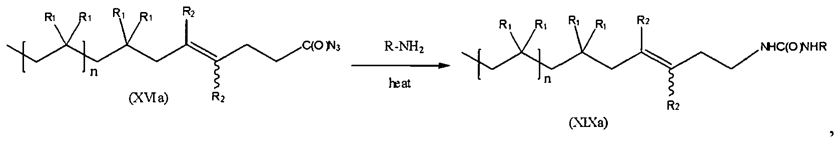 or
d) reacting the compound of formula (XVIa) with a peptide to produce a compound of formula (XXa):

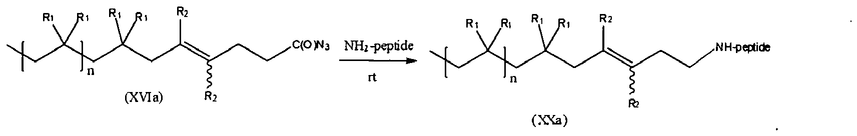

8. The method of Claim 3, wherein
a) the polymer of formula (IIIc) is polyisobutylene, or
b) the polymer of formula (IIIc) is a C₄ to C₇ isomonoolefin polymer, or
c) X¹ is Cl or Br, or
d) the endcap group 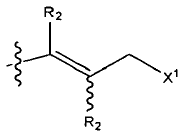 is a chloroallyl group, or
e) the endcap group 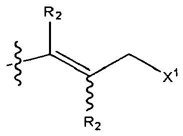 is a bromoallyl group.

9. The method of Claim 3, further including a step of producing the polymer of formula (IIIc) by reacting, in a solvent, a cationic living polymer of formula (I) 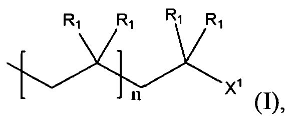 with an optionally substituted conjugated diene of formula (II) as an endcapping reagent, in the presence of a Lewis acid, 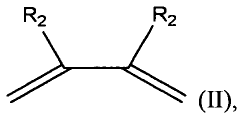 whereby the solvent causes termination by halogenation to be faster than the addition of additional molecules of the conjugated diene, thereby producing an endcapped polymer of formula (IIIc) having a halogenated endcap group 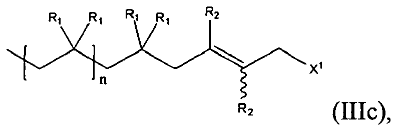 and optionally
a) further including the step of producing the cationic living polymer of formula (I) by reacting a cationically polymerizable monomer in the presence of a coinitiator, or
b) wherein the coinitiator is one or more of BCl₃, TiCl₄, and organoaluminum halides, or
c) wherein termination by halogenation is at least 10-fold faster than the addition of additional molecules of the conjugated diene, or
d) wherein the solvent comprises at least one component having a dielectric constant less than 9, or
e) wherein the solvent is selected from one or more of hexane, cyclohexane, methylcyclohexane, methylchloride, n-butyl chloride, dichloromethane, toluene, and chloroform.

10. The method of Claim 3, wherein X¹ is Cl, and optionally wherein the hydrolysis is carried out
a) at a temperature from 80 °C to 120 °C, or
b) at a temperature from 100 °C to 150 °C, or
c) for the duration from 12 hours to 36 hours, or
d) in the presence of from 1% to 25% alkali metal hydroxide by weight.

11. The method of Claim 3, wherein
a) X¹ is Cl, the hydrolysis is carried out at a temperature from 80 °C to 120 °C for the duration from 12 hours to 36 hours in the presence of from 1% to 25% alkali metal hydroxide by weight, and optionally the alkali metal hydroxide concentration is at 1-10% by weight, and the hydrolysis is carried out for 20-28 hours at 90-110 °C, or
b) X¹ is Cl, the hydrolysis is carried out at a temperature from 100 °C to 150 °C for the duration from 12 hours to 36 hours in the presence of 1% to 25% alkali metal hydroxide by weight, and optionally the alkali metal hydroxide concentration is at 1-10% by weight, and the hydrolysis is carried out for 20-28 hours at 120-140 °C.

12. The method of Claim 3, wherein X¹ is Br, and optionally wherein the hydrolysis is carried out
a) at a temperature from 60 °C to 100 °C, or
b) at a temperature from 100 °C to 150 °C, or
c) for the duration from 1 hours to 10 hours, or
d) in the presence of from 0.5% to 60% alkali metal hydroxide by weight.

13. The method of Claim 3, wherein
a) X¹ is Br, the hydrolysis is carried out at a temperature from 60 °C to 100 °C, for the duration from 12 hours to 36 hours, in the presence of from 0.5% to 60% alkali metal hydroxide by weight, and optionally the alkali metal hydroxide concentration is at 40-60% by weight, and the hydrolysis is carried out for 20-28 hours at 55-75 °C, or
b) X¹ is Br, the hydrolysis is carried out at a temperature from 100 °C to 150 °C, for the duration from 12 hours to 36 hours, in the presence of from 0.5% to 60% alkali metal hydroxide by weight, and optionally the alkali metal hydroxide concentration is at 0.5-1.5% by weight, and the hydrolysis is carried out for 20-28 hours at 120-140 °C.

14. A functional end-capped living cationic polymer of formula (XXXa): 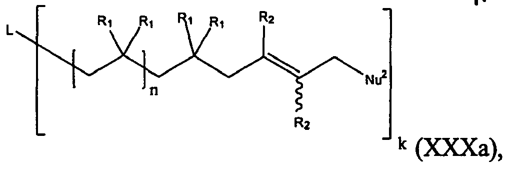 wherein
n is an integer not less than 2;
k is an integer greater than or equal to 1;
L is an initiator residue;
R₁ for each occasion is independently H or a C1-C4 alkyl, an alkoxy or a substituted or unsubstituted aryl; and
R₂ for each occasion is independently H or X², CH₂X², CHX²₂, -CX²₃, -C= N, -NO₂, wherein X², for each occurrence, is independently a halogen;
Nu² is selected from N₃-, HC₂CH₂-O-, HO-, R^{a}O-, wherein R^{a} is a C1-C12 alkyl or a polymer or copolymer fragment, thymine, -CH₂-C(O)OH, -C(O)N₃, -NHC(O)OR, -C(O)NHR, -NHC(O)NHR, wherein R is a C1-C12 alkyl, or a peptide-NH-.

15. A compound of Claim 14 represented by formula (XXXI): 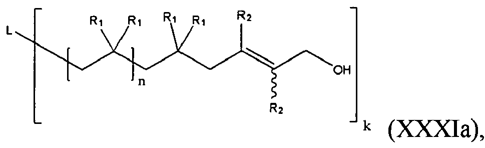 or
b) by formula (XXXIIa): 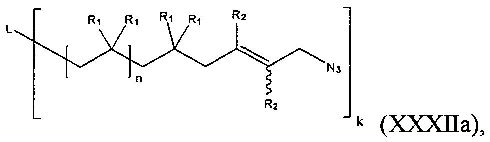 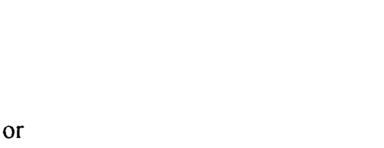
c) by formula (XXXIVa): 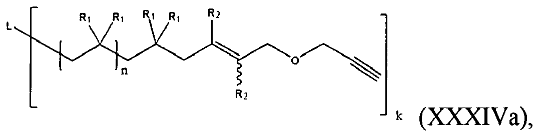 or
d) by formula (XXXVa): 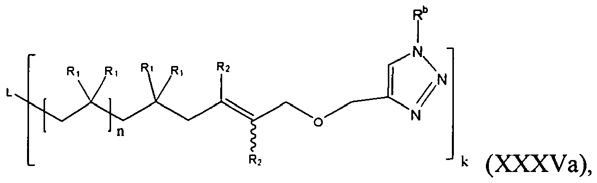 wherein R^{b} is an optionally substituted alkyl, an optionally substituted aryl, an optionally substituted heteroaryl or a polymer or copolymer fragment, and optionally wherein R^{b} is a straight or branched alkyl CₙH₂ₙ₊₁, wherein n = 1-100, or phenyl, benzyl, thiophenyl, each optionally substituted by a halogen, -OH, -CN, or -NH₃ ; or PEG, or R^{b} is a polymer or a copolymer, or
e) by formula (XXXVIa): 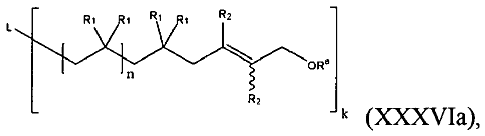 wherein R^{a} is methyl, ethyl or polyethylene oxide fragment, optionally wherein R^{a} is a PEG fragment or R^{a} is methyl, ethyl or polyethylene oxide fragment, or
f) by formula (XXXVIIa): 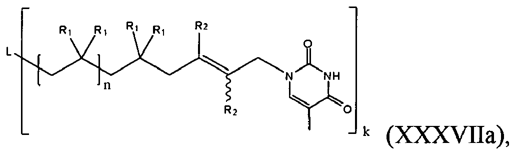 or
g) by formula (XXXVIIIa): 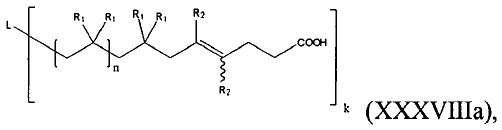 or
h) by formula (XXXIXa): 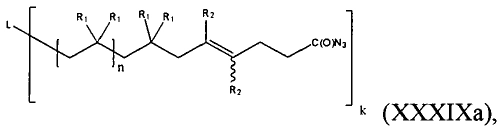 or
i) by formula (XLa): 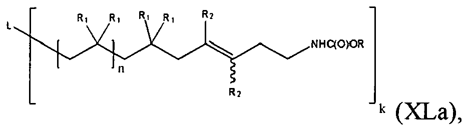 wherein R is a C1-C12 alkyl, or
j) by formula (XLIa): 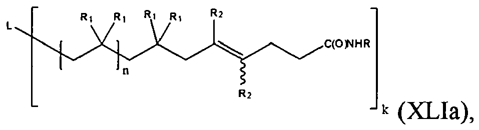 wherein R is a C1-C12 alkyl, or
k) by formula (XLIIa): 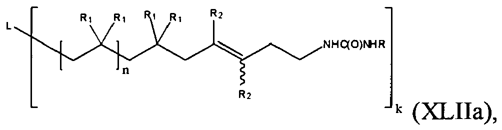 wherein R is a C1-C12 alkyl, or
l) by formula (XLIII):

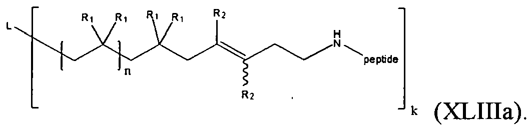

16. The method of claim 1, wherein the groups R₂ are in a relative trans position.

## Patentansprüche

1. Ein Verfahren zur Synthetisierung einer Verbindung mit der Formel (IIIe), 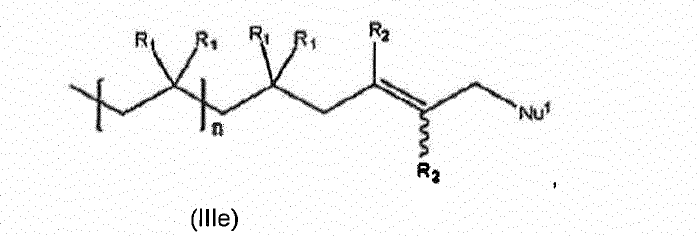 das die Stufe der Umsetzung einer Verbindung mit der Formel (IIIc) 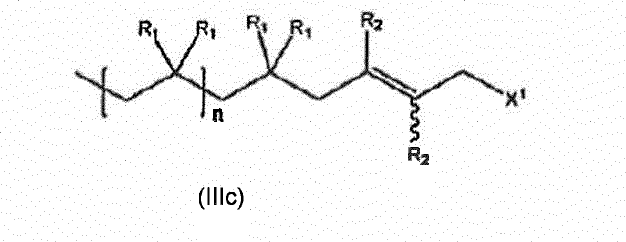 zur nukleophilen Substitution von X¹ durch Nu¹ umfasst,
wobei:
R₁ jeweils unabhängig voneinander H oder ein C1-C4-Alkyl, ein Alkoxy oder ein substituiertes bzw. nicht substituiertes Aryl bedeutet;
R₂ jeweils unabhängig voneinander die Bedeutung H, X², -CH₂X², -CHX²₂, -CX²₃, -C=N oder -NO₂ hat;
n eine ganze Zahl von nicht weniger als 2 ist;
X¹ und X² jeweils unabhängig voneinander, ein Halogen sind, und Nu¹ aus N₃-, HC₂CH₂-O-, HO-, R^{a}O-, Thymin, -CH₂-C(O)OH ausgewählt wird, wobei R^{a} ein C1-C12-Alkyl oder ein Polymer- bzw. Copolymer-Fragment ist.

2. Verfahren nach Anspruch 1, wobei die Umsetzung der Verbindung mit der Formel (IIIc) zur nukleophilen Substitution von X¹ durch -OH entsprechend dem nachstehenden Schema erfolgt:

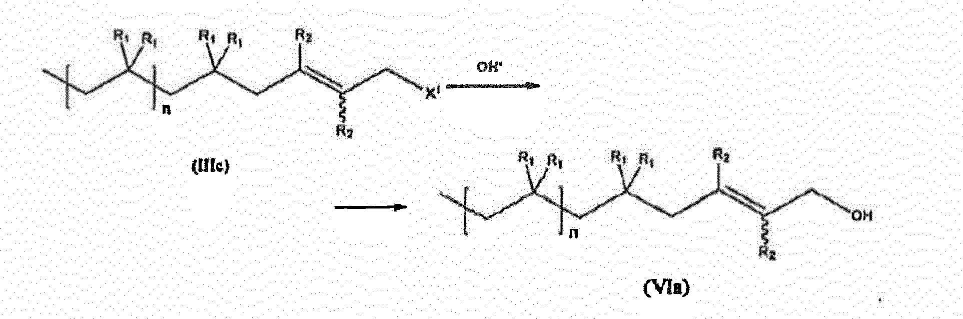

3. Verfahren nach Anspruch 2, wobei die Umsetzung der Verbindung mit der Formel (IIIc) durch Hydrolysieren in Gegenwart einer Base erfolgt.

4. Verfahren nach Anspruch 1, wobei die Umsetzung der Verbindung mit der Formel (IIIc) zur nukleophilen Substitution von X¹ durch N₃⁻entsprechend dem nachstehenden Schema erfolgt: 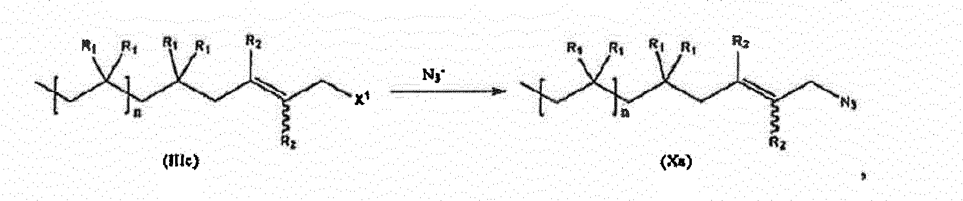 und wahlweise desweiteren die Stufe der Reduzierung der Verbindung mit der Formel (Xa) zur Herstellung der Verbindung mit der Formel (XIa) enthält:

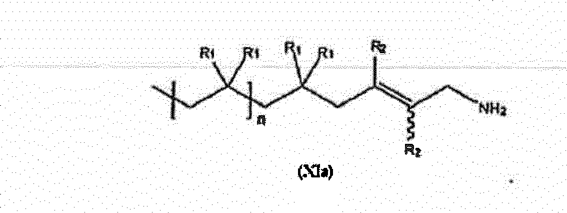

5. Verfahren nach Anspruch 1, wobei die Umsetzung der Verbindung mit der Formel (IIIc) zur nukleophilen Substitution von X¹ durch -OCH₂CCH entsprechend dem nachstehenden Schema erfolgt: 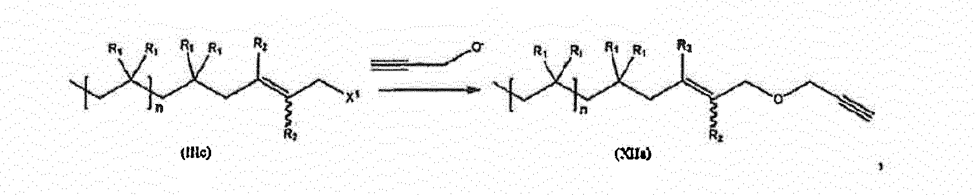 und wahlweise desweiteren die Stufe der Umsetzung der Verbindung der Formel (Xlla) mit R^{b}N₃ enthält, um eine Verbindung mit der Formel (XXIa) entsprechend dem nachstehenden Schema zu erhalten: 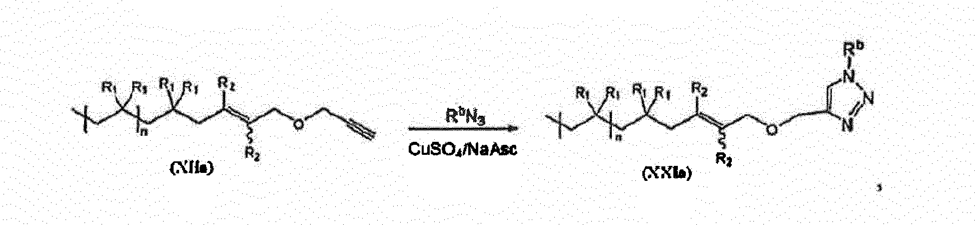 wobei R^{b} ein wahlweise substituiertes Alkyl, ein wahlweise substituiertes Aryl, ein wahlweise substituiertes Heteroaryl oder ein Polymer- bzw. Copolymer-Fragment darstellt, insbesondere wobei R^{b} die Bedeutung eines nicht verzweigten oder verzweigten Alkyl-CₙH₂ₙ₊₁ hat, wobei n = 1-100, oder Phenyl, Benzyl, Thiophenyl ist, die jeweils wahlweise durch ein Halogen, -OH, -CN,-NH₃ oder PEG substituiert sind.

6. Verfahren nach Anspruch 1, wobei
a) die Umsetzung der Verbindung mit der Formel (IIIc) zur nukleophilen Substitution von X¹ durch -OR^{a} entsprechend dem nachstehenden Schema erfolgt: 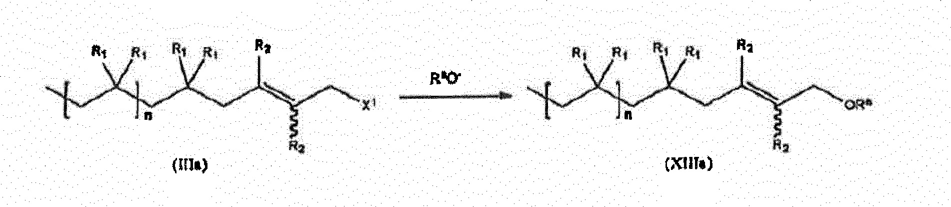 wobei R^{a} ein C1-C12-Alkyl oder ein Polymer bzw. Copolymer-Fragment darstellt, beispielsweise, wobei es sich bei R^{a} um ein PEG-Fragment handelt, oder wobei R^{a} ein Methyl, Ethyl oder PolyethylenOxid-Fragment darstellt, oder
b) die Umsetzung der Verbindung mit der Formel (IIIc) zur nukleophilen Substitution von X¹ durch Thymin entsprechend dem nachstehenden Schema erfolgt:

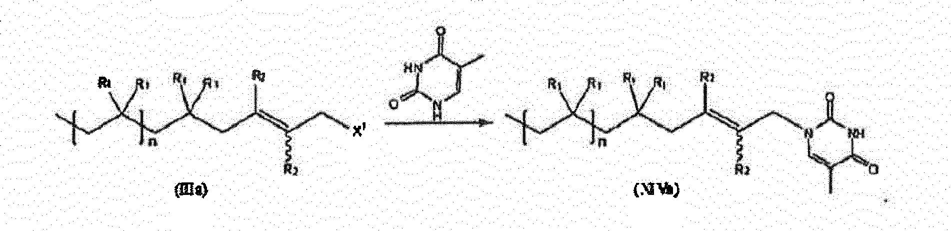

7. Verfahren nach Anspruch 1, wobei die Umsetzung der Verbindung mit der Formel (IIIc) zur nukleophilen Substitution von X¹ durch -CH₂-COOH entsprechend dem nachstehenden Schema erfolgt: 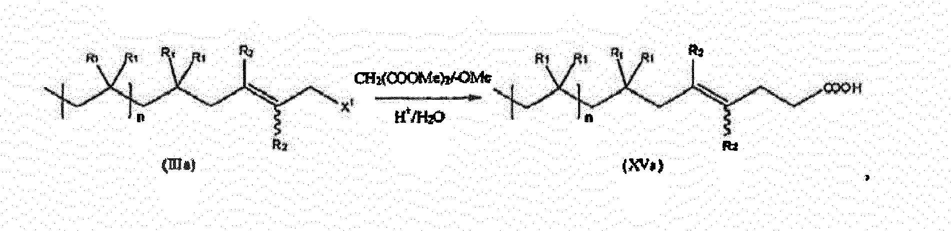 und wahlweise desweiteren die Stufe der Umsetzung der Verbindung der Formel (XVa) mit einem Azid entsprechend dem nachstehenden Schema enthält, um eine Verbindung mit der Formel (XVIa) herzustellen: 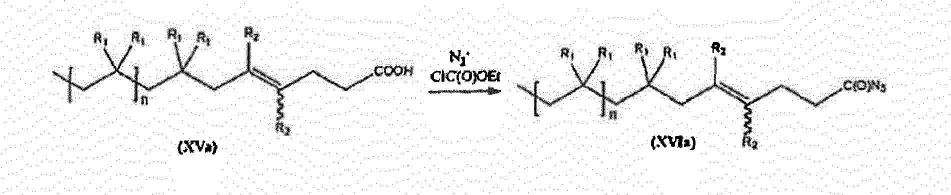 und wahlweise desweiteren die Stufe
a) der Umsetzung der Verbindung der Formel (XVIa) mit einem Alkohol R-OH enthält, um eine Verbindung mit der Formel (XVIIa) herzustellen: 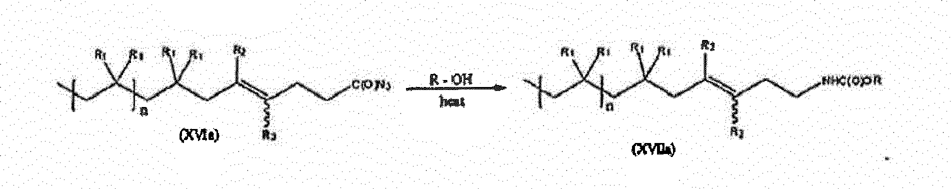 wobei R ein C1-C12-Alkyl ist, oder
b) der Umsetzung der Verbindung der Formel (XVIa) mit einem Amin der Formel R-NH₂ enthält, um eine Verbindung mit der Formel (XVIIIa) herzustellen: 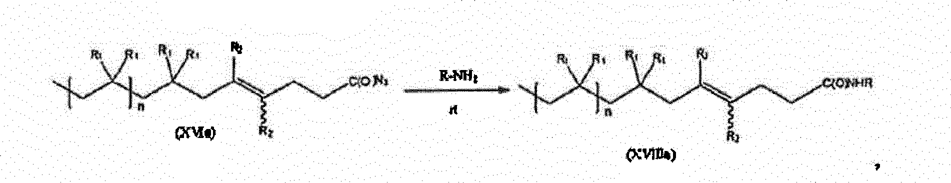 oder:
c) der Umsetzung der Verbindung der Formel (XVIa) mit einem Amin der Formel R-NH₂ enthält, um eine Verbindung mit der Formel (XIXa) herzustellen: 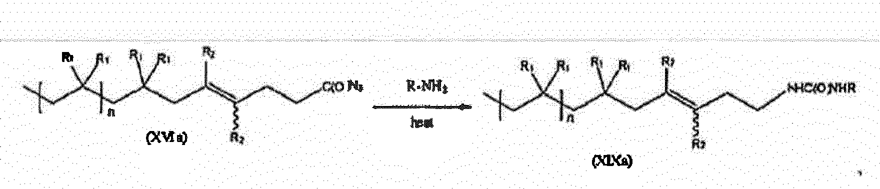 oder:
d) der Umsetzung der Verbindung der Formel (XVIa) mit einem Peptid enthält, um eine Verbindung mit der Formel (XXa) herzustellen:

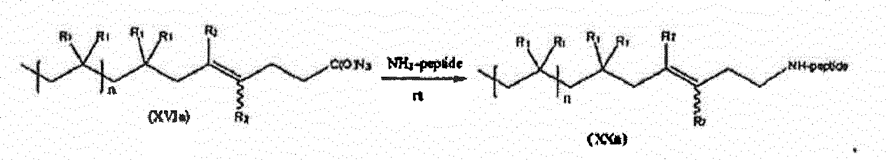

8. Verfahren nach Anspruch 3, wobei
a) das Polymer der Formel (IIIc) Polyisobutylen ist, oder
b) das Polymer der Formel (IIIc) ein C₄- bis C₇-Isomonoolefin-Polymer ist, oder
c) X¹ Cl oder Br ist, oder
d) die Endgruppe 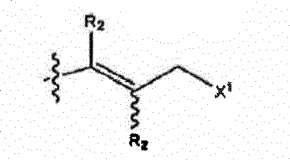 eine Chlorallyl-Gruppe ist, oder
e) die Endgruppe 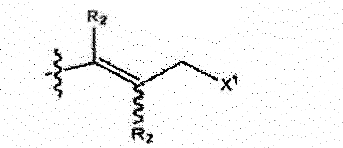 eine Bromallyl-Gruppe ist.

9. Verfahren nach Anspruch 3, das desweiteren eine Stufe zur Herstellung des Polymers der Formel (IIIc) umfasst, in dem, in einem Lösungsmittel, ein kationisches lebendes Polymer der Formel (I) 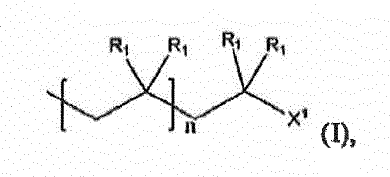 in Gegenwart einer Lewis-Säure mit einem wahlweise substituierten konjugierten Diol der Formel (II) als einem endständigen Reagens umgesetzt wird, 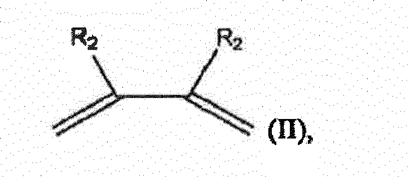 wobei das Lösungsmittel durch Halogenierung die Terminierung schneller erfolgen lässt als bei Hinzufügen zusätzlicher Moleküle des konjugierten Diols; so wird ein endständiges Polymer der Formel (IIIc) mit halogenierter Endgruppe gebildet, 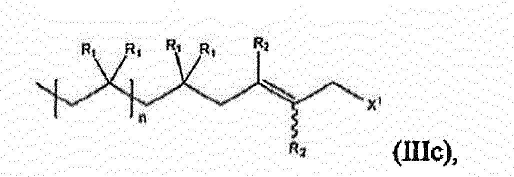 und das wahlweise
a) auch die Stufe der Erzeugung des kationischen lebenden Polymers der Formel (I) umfasst, indem ein kationisches polymerisierbares Monomer in Gegenwart eines Ko-Initiators umgesetzt wird, oder
b) wobei es sich beim Ko-Initiator um eines oder mehrere von BCl₃, TiCl₄ und aluminiumorganischen Haliden handelt, oder
c) wobei die Terminierung durch Halogenierung mindestens zehnmal schneller erfolgt als bei Hinzufügen zusätzlicher Moleküle des konjugierten Diols, oder
d) wobei das Lösungsmittel mindestens eine Komponente mit einer dielektrischen Konstante von weniger als 9 umfasst, oder
e) wobei das Lösungsmittel aus einem oder mehreren von Hexan, Cyclohexan, Methylcyclohexan, Methylchlorid, n-Butylchlorid, Dichlormethan, Toluol und Chloroform ausgewählt wird.

10. Verfahren nach Anspruch 3, wobei X¹ Cl ist und die Hydrolyse wahlweise durchgeführt wird:
a) bei einer Temperatur von 80°C bis 120°C, oder
b) bei einer Temperatur von 100°C bis 150°C, oder
c) während 12 bis 36 Stunden, oder
d) in Gegenwart von 1 Gew.-% bis 25 Gew.-% Alkalimetallhydroxid.

11. Verfahren nach Anspruch 3, wobei
a) X¹ Cl ist, die Hydrolyse bei einer Temperatur von 80°C bis 120°C während 12 bis 36 Stunden in Gegenwart von 1 Gew.-% bis 25 Gew.-% Alkalimetallhydroxid durchgeführt wird, die Alkalimetallhydroxid-Konzentration wahlweise 1 - 10 Gew.-% beträgt und die Hydrolyse während 20 - 28 Stunden bei 90 - 110°C durchgeführt wird, oder
b) X¹ Cl ist, die Hydrolyse bei einer Temperatur von 100°C bis 150°C während 12 bis 36 Stunden in Gegenwart von 1 Gew.-% bis 25 Gew.-% Alkalimetallhydroxid durchgeführt wird, die Alkalimetallhydroxid-Konzentration wahlweise 1 - 10 Gew.-% beträgt und die Hydrolyse während 20 - 28 Stunden bei 120 - 140°C durchgeführt wird.

12. Verfahren nach Anspruch 3, wobei X¹ Br ist und die Hydrolyse wahlweise durchgeführt wird:
a) bei einer Temperatur von 60°C bis 100°C, oder
b) bei einer Temperatur von 100°C bis 150°C, oder
c) während 1 bis 10 Stunden, oder
d) in Gegenwart von 0,5 Gew.-% bis 60 Gew.-% Alkalimetallhydroxid.

13. Verfahren nach Anspruch 3, wobei
a) X¹ Br ist, die Hydrolyse bei einer Temperatur von 60°C bis 100°C während 12 bis 36 Stunden in Gegenwart von 0,5 Gew.-% bis 60 Gew.-% Alkalimetallhydroxid durchgeführt wird, die Alkalimetallhydroxid-Konzentration wahlweise 40 - 60 Gew.-% beträgt und die Hydrolyse während 20 - 28 Stunden bei 55 - 75°C durchgeführt wird, oder:
b) X¹ Br ist, die Hydrolyse bei einer Temperatur von 100°C bis 150°C während 12 bis 36 Stunden in Gegenwart von 0,5 Gew.-% bis 60 Gew.-% Alkalimetallhydroxid durchgeführt wird, die Alkalimetallhydroxid-Konzentration wahlweise 0,5 - 1,5 Gew.-% beträgt und die Hydrolyse während 20 - 28 Stunden bei 120 - 140°C durchgeführt wird.

14. Ein endständiges kationisches lebendes Funktionspolymer mit der Formel (XXXa): 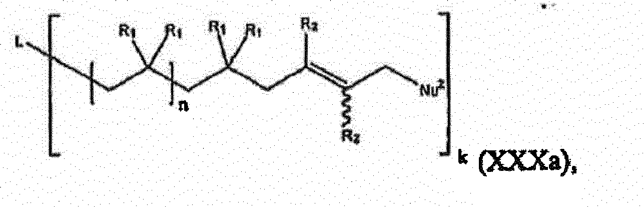 wobei
n eine ganze Zahl von nicht weniger als 2 ist;
k eine ganze Zahl größer als oder gleich 1 ist;
L ein Initiator-Rest ist;
R₁ jeweils unabhängig voneinander H oder ein C1-C4-Alkyl, ein Alkoxy oder ein substitutiertes bzw. nicht substituiertes Aryl bedeutet; und
R₂ jeweils unabhängig voneinander die Bedeutung H oder X², CH₂X², CHX²₂, -CX²₃, -C=N oder -NO₂ hat, wobei X² jeweils unabhängig voneinander ein Halogen ist; Nu² aus N₃-, HC₂CH₂-O-, HO-, R^{a}O-ausgewählt wird, wobei R^{a} ein C1-C12-Alkyl oder ein Polymer- bzw. Copolymer-Fragment, Thymin, -CH₂-C(O)OH, -C(O)N₃, -NHC(O)OR, -C(O)NHR, -NHC(O)NHR ist, wobei R ein C1-C12-Alkyl oder ein Peptid-NH- ist.

15. Eine Verbindung nach Anspruch 14, dargestellt durch die Formel (XXXI): 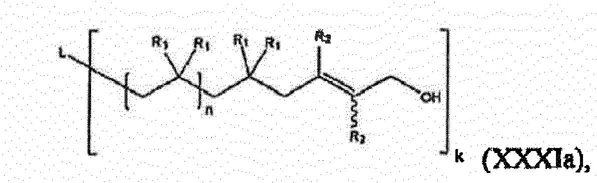 oder:
b) durch die Formel (XXXIIa): 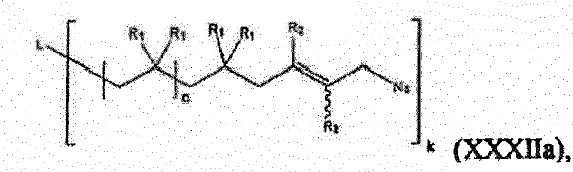 oder:
c) durch die Formel (XXXIVa): 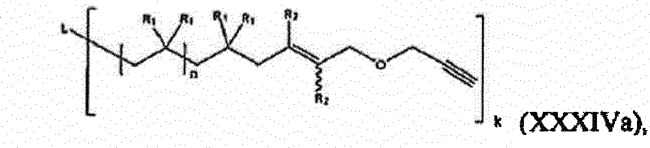 oder:
d) durch die Formel (XXXVa): 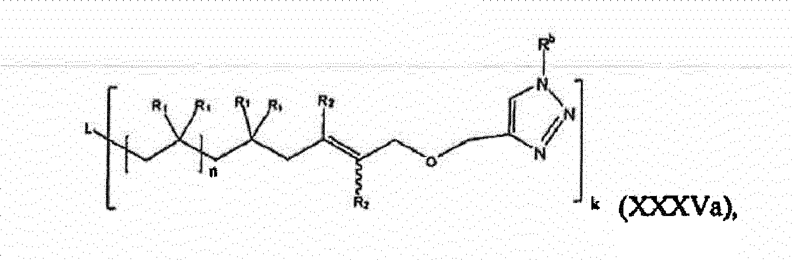 wobei R^{b} ein wahlweise substituiertes Alkyl, ein wahlweise substituiertes Aryl, ein wahlweise substituiertes Heteroaryl oder ein Polymer- bzw. Copolymer-Fragment darstellt, und wobei wahlweise R^{b} die Bedeutung eines nicht verzweigten oder verzweigten Alkyl-CnH₂ₙ₊₁ hat, wobei n = 1 -100, oder Phenyl, Benzyl, Thiophenyl ist, die jeweils wahlweise durch ein Halogen, -OH, -CN oder -NH₃ substituiert sind; oder PEG, oder wobei R^{b} ein Polymer oder ein Copolymer ist, oder
e) durch die Formel (XXXVIa): 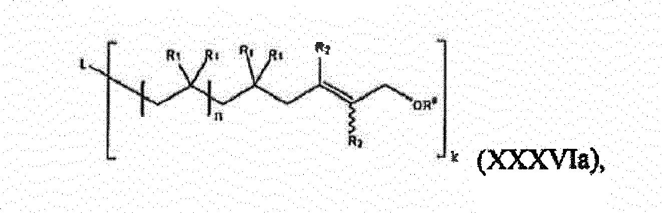 wobei R^{a} Methyl, Ethyl oder ein Polyethylenoxid-Fragment ist, wobei wahlweise R^{a} ein PEG-Fragment ist oder R^{a} ein Methyl, Ethyl oder ein Polyethylenoxid-Fragment ist, oder
f) durch die Formel (XXXVIIa): 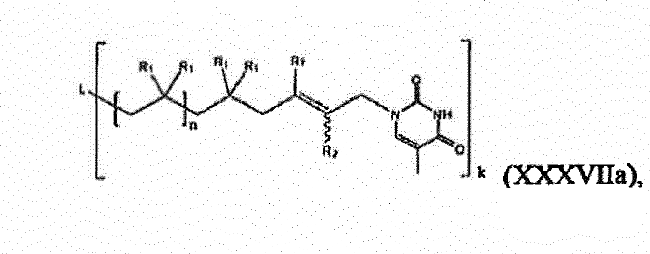 oder:
g) durch die Formel (XXXVIIIa): 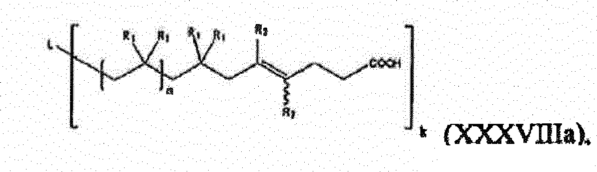 oder:
h) durch die Formel (XXXIXa): 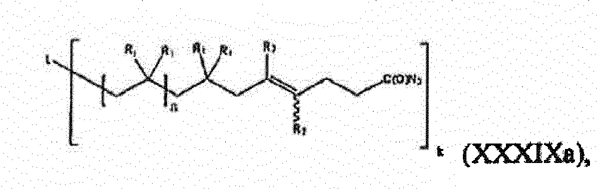 oder:
i) durch die Formel (XLa): 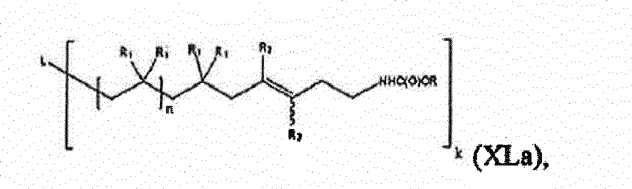 wobei R ein C1-C12₋Alkyl ist, oder:
j) durch die Formel (XLIa): 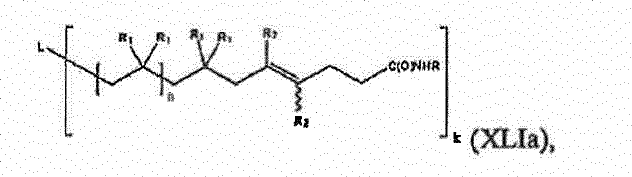 wobei R ein C1-C12-Alkyl ist, oder:
k) durch die Formel (XLIIa): 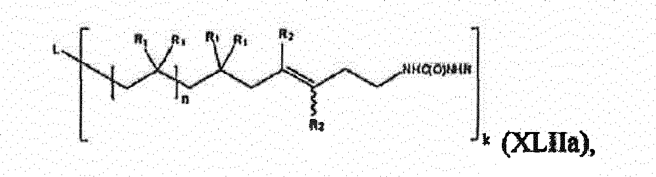 wobei R ein C1-C12-Alkyl ist, oder:
I) durch die Formel (XLIII):

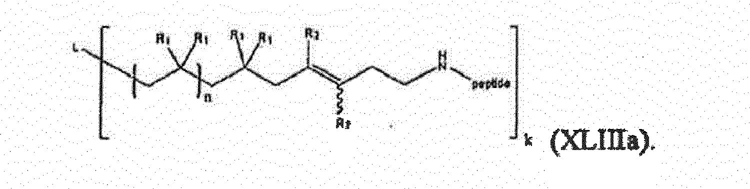

16. Verfahren nach Anspruch 1, wobei sich die R₂-Gruppen in relativer Transposition befinden.

## Revendications

1. Méthode de synthèse d'un composé de formule (IIIe), 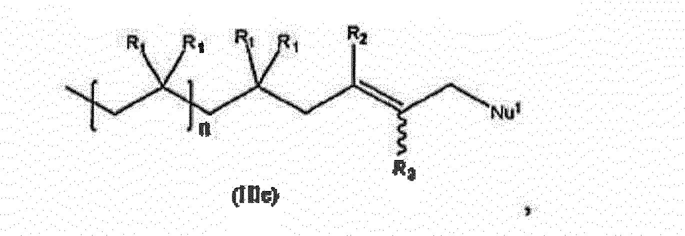 comprenant une étape de réaction d'un composé de formule (IIIc) 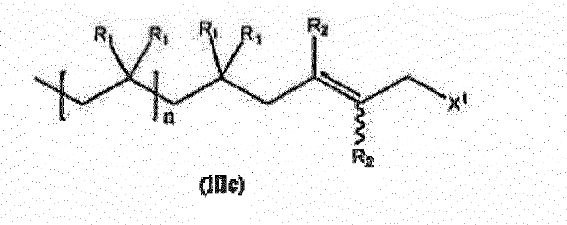 par substitution nucléophile de X¹ par Nu¹
dans lequel :
R₁, à chaque fois, est indépendamment H ou un alkyl en C1-C4, un alcoxy ou un aryle substitué ou non substitué ;
R₂, à chaque fois, est indépendamment H, X², -CH₂X², -CHX²₂, -CX²₃, -C=N, ou - NO₂;
n est un entier non inférieur à 2 ;
X¹ et X², à chaque fois, sont indépendamment un halogène, et
Nu¹ est sélectionné parmi N₃-, HC₂CH₂-O, HO-, R^{a}O-, thymine, -CH₂-C(O)OH, R^{a} étant un alkyl en C1-C12 ou un polymère ou un fragment de copolymère.

2. Méthode selon la revendication 1, dans laquelle le composé de formule (IIIc) réagit selon le schéma suivant, par substitution nucléophile de X¹ par -OH :

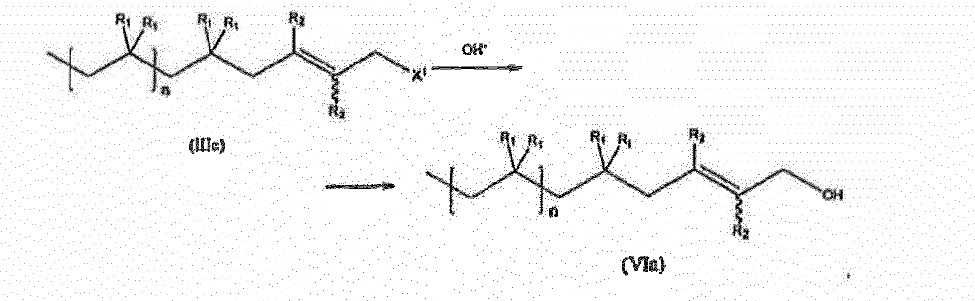

3. Méthode selon la revendication 2, dans laquelle le composé de formule (IIIc) réagit par hydrolyse en présence d'une base.

4. Méthode selon la revendication 1, dans laquelle le composé de formule (IIIc) réagit selon le schéma suivant par substitution nucléophile de X¹ par N₃⁻ : 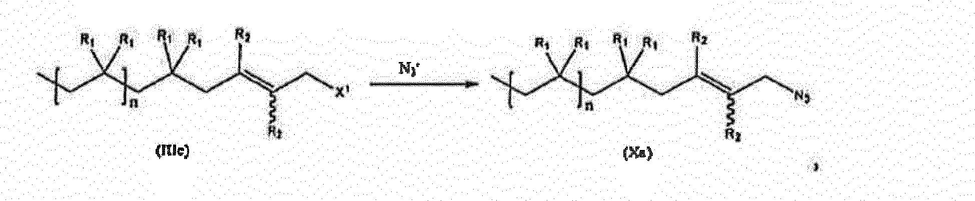 comprenant optionnellement en outre une étape de réduction du composé de formule (Xa) pour produire le composé de formule (XIa) :

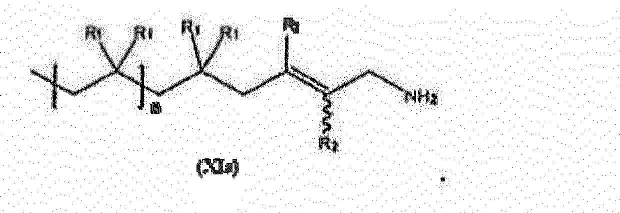

5. Méthode selon la revendication 1, dans laquelle le composé de formule (IIIc) réagit selon le schéma suivant par substitution nucléophile de X¹ par -OCH₂CCH : 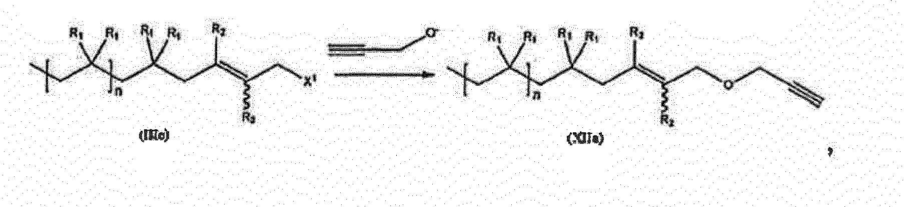 comprenant optionnellement en outre l'étape de réaction du composé de formule (XIIa) avec R^{b}N₃ pour obtenir un composé de formule (XXIa), selon le schéma suivant : 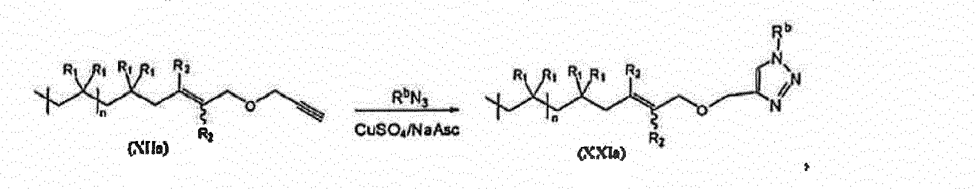 R^{b} étant un alkyl optionnellement substitué, un aryle optionnellement substitué, un hétéroaryle optionnellement substitué ou un polymère ou un fragment de copolymère, notamment R^{b} étant un alkyl CₙH₂ₙ₊₁, linéaire ou branché, dans lequel n = 1-100, ou un phényle, un benzyle, un thiophényle, chacun pouvant être optionnellement substitué par un halogène, -OH, -CN, -NH₃ ou PEG.

6. Méthode selon la revendication 1 dans laquelle :
a) le composé de formule (IIIc) réagit selon le schéma suivant par substitution nucléophile de X¹ par -OR^{a}, 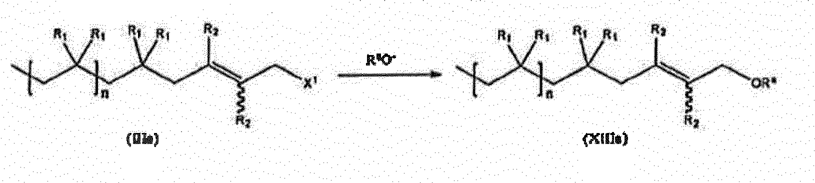 R^{a} étant un alkyl en C1-C12 ou un polymère ou un fragment de copolymère, par exemple R^{a} étant un fragment de PEG, ou Ra étant un méthyl, un éthyl ou un fragment de poly(oxyéthyléne), ou
b) le composé de formule (IIIc) réagit selon le schéma suivant par substitution nucléophile de X¹ par la thymine :

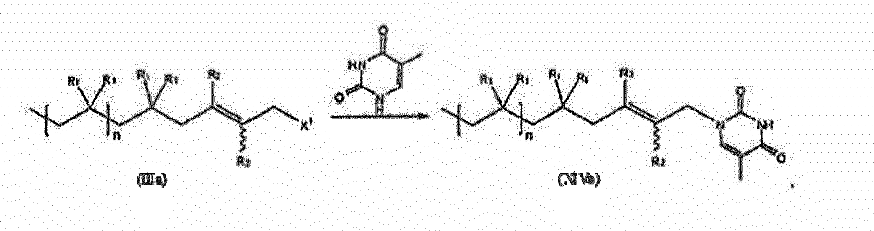

7. Méthode selon la revendication 1, dans laquelle le composé de formule (IIIc) réagit selon le schéma suivant par substitution nucléophile de X¹ par -CH₂-COOH : 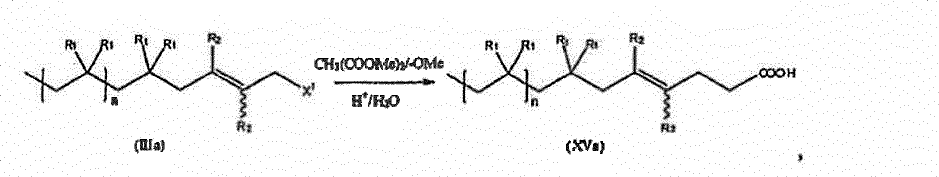 comprenant optionnellement en outre l'étape de réaction du composé de formule (XVa) avec un azide selon le schéma suivant pour produire un composé de formule (XVIa) : 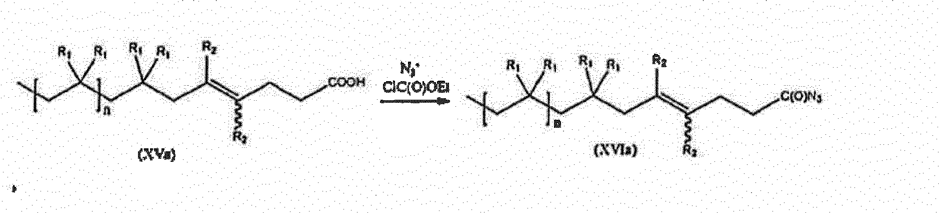 comprenant optionnellement en outre l'étape de
a)Réaction du composé de formule (XVIa) avec un alcool R-OH pour produire un composé de formule (XVIIa) : 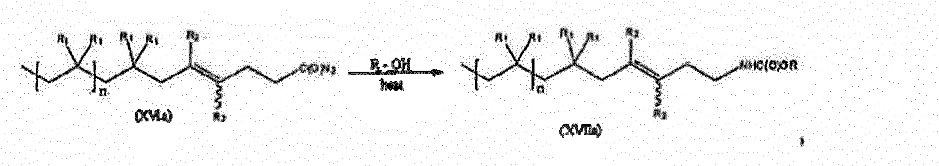 R étant un alkyl en C1-C12, ou
b) Réaction du composé de formule (XVIa) avec une amine de formule R-NH₂, pour produire un composé de formule (XVIIIa) : 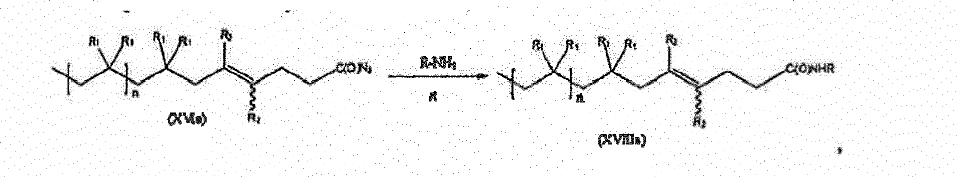 ou
c) Réaction du composé de formule (XVIa) avec une amine de formule R-NH₂ pour produire un composé de formule (XIXa) : 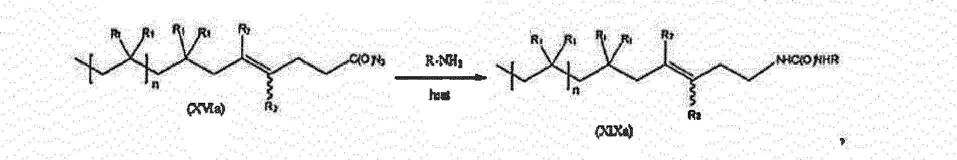 ou
d) Réaction du composé de formule (XVIa) avec un peptide pour produire un composé de formule (XXa) :

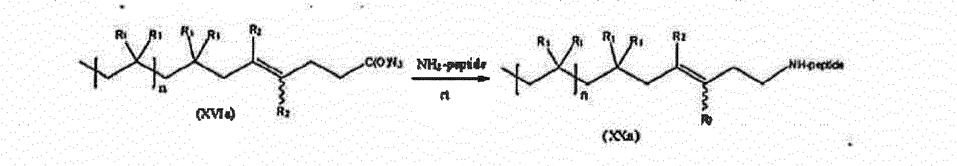

8. Méthode selon la revendication 3, dans laquelle :
a) le polymère de formule (IIIc) est du polyisobutylène, ou
b) le polymère de formule (IIIc) est un polymère isomonooléfine en C4-C7, ou
c) X¹ est Cl ou Br, ou
d) le groupe terminal 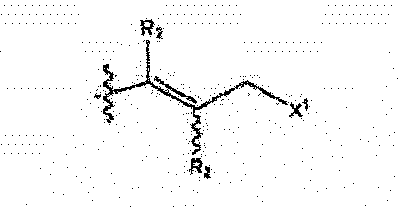 est un groupe chloroallyle, ou
e) le groupe terminal 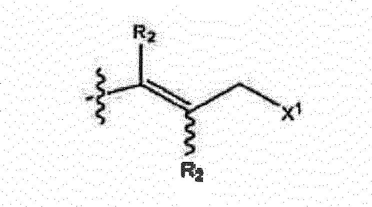 est un groupe bromoallyle.

9. Méthode selon la revendication 3, comprenant en outre une étape de production du polymère de formule (IIIc) en faisant réagir, dans un solvant, un polymère terminal cationique de formule (I) 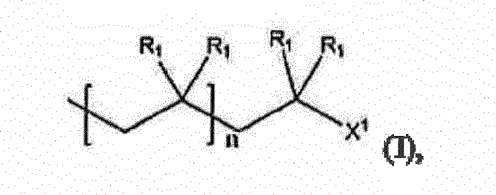 avec un diène conjugué optionnellement substitué de formule (II) en tant que réactif de terminaison, en présence d'un acide de Lewis, 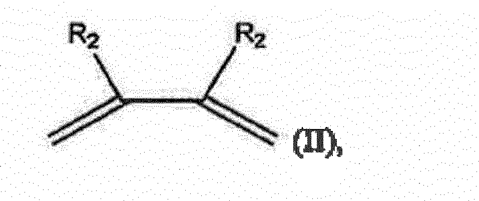 selon laquelle le solvant conduit à une terminaison par halogénation plus rapide que l'addition de molécules additionnelles du diène conjugué, produisant ainsi un polymère terminé de formule (IIIc) ayant un groupe terminal halogéné 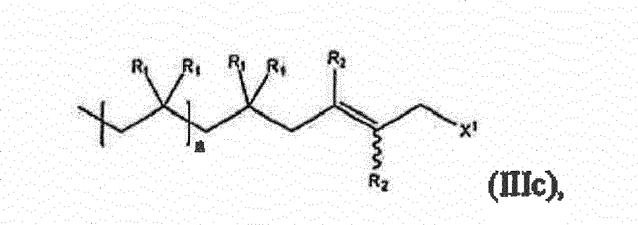 et optionnellement
a) comprenant en outre une étape de production du polymère terminal cationique de formule (I) en faisant réagir un monomère polymérisable cationique en présence d'un co-initiateur, ou
b) dans laquelle le co-initiateur est un ou plusieurs parmi BCl₃, TiCl4, et les halogénures organoaluminiques, ou
c) dans laquelle la terminaison par halogénation est au moins dix fois plus rapide que l'addition des molécules additionnelles du diène conjugué, ou
d) dans laquelle le solvant comprend au moins un composé ayant une constante diélectrique inférieure à 9, ou
e) dans laquelle le solvant est un ou plusieurs parmi l'hexane, le cyclohexane, le méthylcyclohexane, le chlorure de méthyle, le chlorure de n-butyle, le dichlorométhane, le toluène, et le chloroforme.

10. Méthode selon la revendication 3, dans laquelle X¹ est Cl, et de manière optionnelle dans laquelle l'hydrolyse est réalisée
a) à une température de 80°C à 120°C, ou
b) à une température de 100°C à 150°C, ou
c) pour une durée de 12 heures à 36 heures, ou
d) en présence de 1% à 25% en poids d'hydroxyde de métal alcalin.

11. Méthode selon la revendication 3, dans laquelle
a) X¹ est Cl, l'hydrolyse est réalisée à une température de 80°C à 120°C pour une durée de 12 heures à 36 heures en présence de 1% à 25% en poids d'un hydroxyde de métal alcalin, et optionnellement la concentration en hydroxyde de métal alcalin est de 1 à 10% en poids, et l'hydrolyse est réalisée de 20 à 28 heures à 90-110°C, ou
b) X¹ est Cl, l'hydrolyse est réalisée à une température de 100°C à 150°C pour une durée de 12 heures à 36 heures en présence de 1% à 25% en poids d'un hydroxyde de métal alcalin, et optionnellement la concentration en hydroxyde de métal alcalin est de 1 à 10% en poids, et l'hydrolyse est réalisée de 20 à 28 heures à 120-140°C.

12. Méthode selon la revendication 3, dans laquelle X¹ est Br, et optionnellement dans laquelle l'hydrolyse est réalisée
a) à une température de 60°C à 100°C, ou
b) à une température de 100°C à 150°C, ou
c) pour une durée de 1 heure à 10 heures, ou
d) en présence de 0,5% à 60% en poids d'un hydroxyde de métal alcalin.

13. Méthode selon la revendication 3, dans laquelle
a) X¹ est Br, l'hydrolyse est réalisée à une température de 60°C à 100°C, pour une durée de 12 heures à 36 heures, en présence de 0.5% à 60% en poids d'un hydroxyde de métal alcalin, et optionnellement la concentration en hydroxyde de métal alcalin est de 40% à 60% en poids, et l'hydrolyse est réalisée de 20 à 28 heures à 55-75°C, ou
b) X¹ est Br, l'hydrolyse est réalisée à une température de 100°C à 150°C, pour une durée de 12 heures à 36 heures, en présence de 0.5% à 60% en poids d'un hydroxyde de métal alcalin, et optionnellement la concentration en hydroxyde de métal alcalin est de 0.5% à 1.5% en poids, et l'hydrolyse est réalisée de 20 à 28 heures à 120-140°C.

14. Un polymère fonctionnel terminal cationique terminé de formule (XXXa) 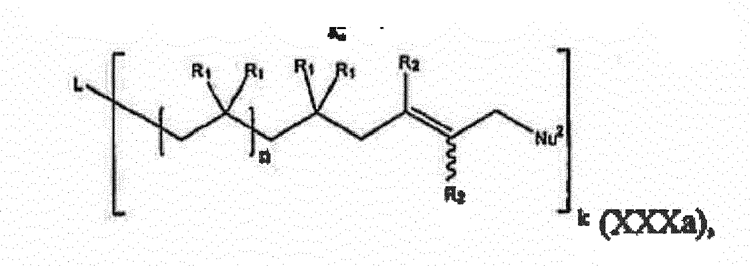 dans lequel
n est un entier non inférieur à 2 ;
k est un entier supérieur ou égal à 1 ;
L est un résidu initiateur ;
R₁, à chaque fois, est indépendamment H ou un alkyl en C1-C4, un alcoxy ou un aryle substitué ou non substitué, et
R², à chacune fois, est indépendamment H ou X², CH₂X², CHX²₂, -CX²₃, -C=N, - NO₂, X², à chaque fois, étant indépendamment un halogène ;
Nu² est sélectionné parmi N³-, HC₂CH₂-O, HO-, R^{a}O-, R^{a} étant un alkyl en C1-C12 ou un polymère ou un fragment de copolymère, la thymine, -CH₂-C(O)OH, - C(O)N₃, - -NHC(O)OR, -C(O) -NHC(O)NHR, R étant un alkyl en C1-C12, ou un peptide-NH-.

15. Composé selon la revendication 14 représenté par la formule (XXXI) : 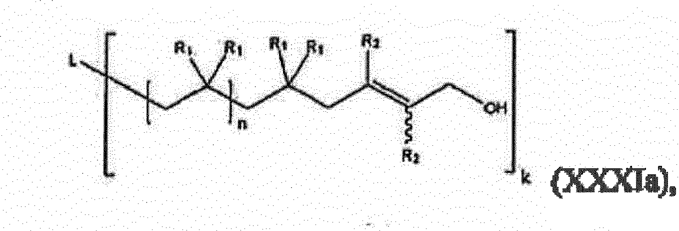 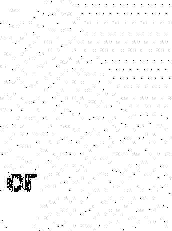
b) ou par la formule (XXXIIa) : 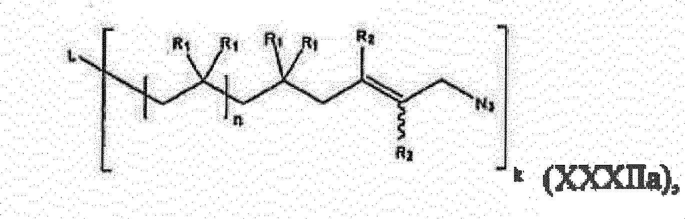 or
c) ou par la formule (XXXIVa) : 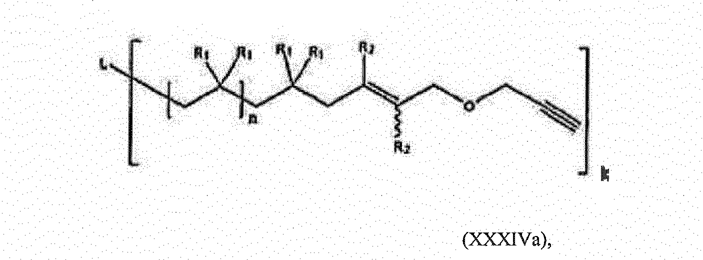
d) ou par la formule (XXXVa) : 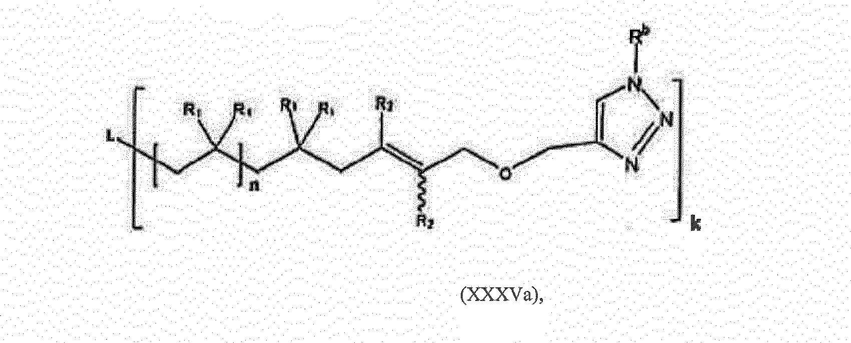 R^{b} étant un alkyl optionnellement substitué, un aryle optionnellement substitué, un hétéroaryle optionnellement substitué ou un polymère ou un fragment de copolymère, et optionnellement R^{b} étant un alkyl CₙH₂ₙ₊₁, linéaire ou branché, dans lequel n = 1-100, ou un phényle, un benzyle, un thiophényle, chacun pouvant être optionnellement substitué par un halogène, -OH, -CN, -NH₃ ; ou PEG, ou Rb étant un polymère ou un copolymère,
e) ou par la formule (XXXVIa) : 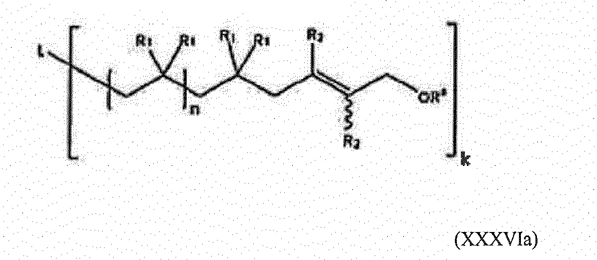 R^{a} étant un méthyl, un éthyl ou un fragment de poly(oxyéthylène), optionnellement R^{a} étant un fragment de PEG ou R^{a} étant un méthyl, un éthyl ou un fragment de poly(oxyéthylène),
f) ou par la formule (XXXVIIa) : 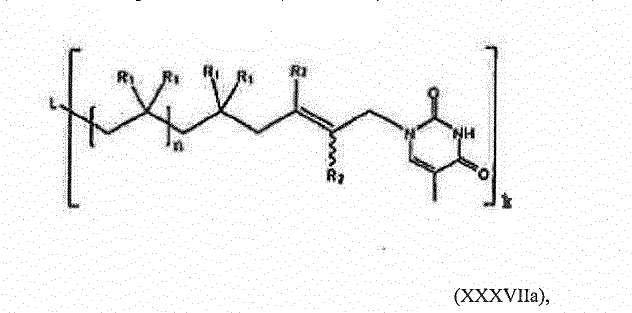
g) ou par la formule (XXXVIIIa) : 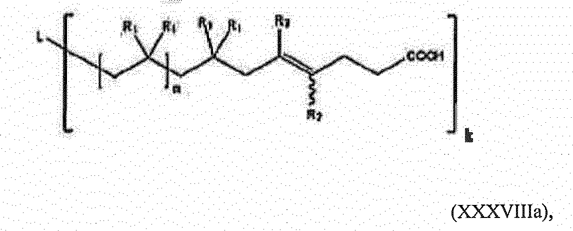
h) ou par la formule (XXXIXa) : 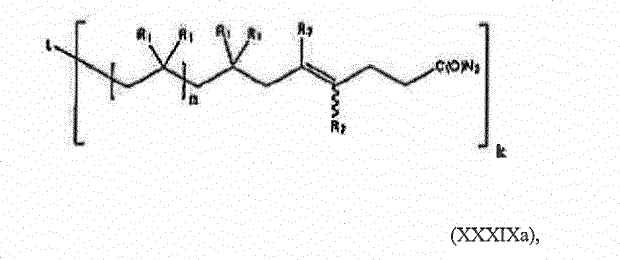
i) ou par la formule (XLa) : 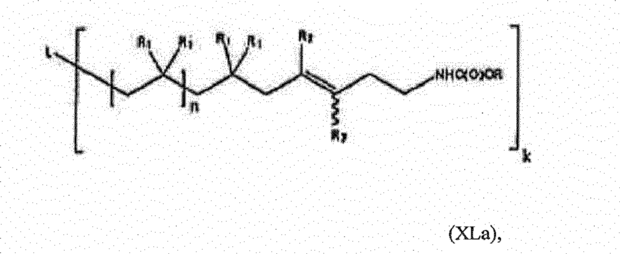 R étant un alkyl en C1-C12,
j) ou par la formule (XLIa) : 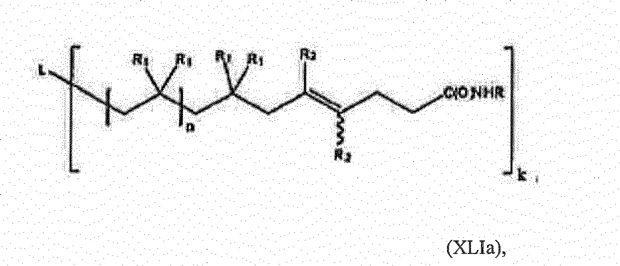 R étant un alkyl en C1-C12,
k) ou par la formule (XLIIa) : 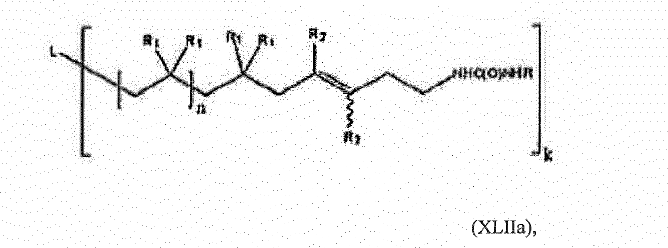 R étant un alkyl en C1-C12,
1) ou par la formule (XLIII) :

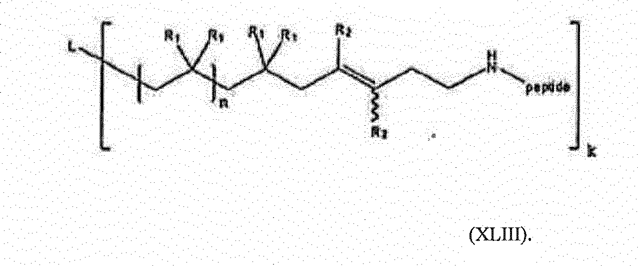

16. Méthode selon la revendication 1, dans laquelle les groupes R2 sont en position relative trans.
